(19) Europäisches Patentamt
European Patent Office
Office européen des brevets

(11) EP 4 597 854 A1

(12) **EUROPEAN PATENT APPLICATION**
published in accordance with Art. 153(4) EPC

(43) Date of publication:
**06.08.2025 Bulletin 2025/32**

(21) Application number: **23870140.3**

(22) Date of filing: **31.08.2023**

(51) International Patent Classification (IPC):
***H04B 7/04*** *(2017.01)*

(52) Cooperative Patent Classification (CPC):
**H04B 7/04; H04B 7/06**

(86) International application number:
**PCT/CN2023/116122**

(87) International publication number:
**WO 2024/066900 (04.04.2024 Gazette 2024/14)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **30.09.2022 CN 202211216179**

(71) Applicant: **Datang Mobile Communications Equipment Co., Ltd.**
**Beijing 100085 (CN)**

(72) Inventors:
- **YE, Lingyun**
  **Beijing 100085 (CN)**
- **HUANG, Qiuping**
  **Beijing 100085 (CN)**

(74) Representative: **Studio Torta S.p.A.**
**Via Viotti, 9**
**10121 Torino (IT)**

# (54) UPLINK TRANSMISSION METHOD, TERMINAL, NETWORK DEVICE, APPARATUS, AND STORAGE MEDIUM

(57) Embodiments of the present invention provide an uplink transmission method, a terminal, a network device, an apparatus, and a storage medium. The method comprises: receiving precoding matrix indication information; determining, from candidate precoding matrixes, a precoding matrix indicated by the precoding matrix indication information, the candidate precoding matrixes comprising a first type of matrixes and/or a second type of matrixes, the first type of matrixes being determined on the basis of a fully-coherent codeword and a zero matrix, and the second type of matrixes being determined on the basis of a partially-coherent codeword or a non-coherent codeword; and on the basis of the precoding matrix, performing uplink transmission.

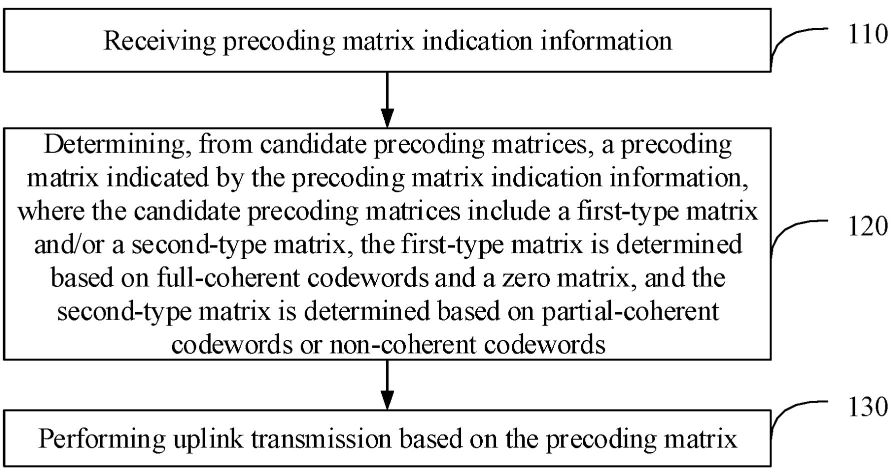


FIG. 1

EP 4 597 854 A1

## Description

CROSS-REFERENCES TO RELATED APPLICATIONS

The present application claims priority to Chinese patent application No. 202211216179.5 filed on September 30, 2022, entitled "Uplink Transmission Method, Terminal, Network Device, Apparatus, and Storage Medium", which is hereby incorporated by reference in its entirety.

FIELD

The present application relates to the field of communications, and in particular, to methods and apparatuses for uplink transmission, a terminal, a network device and a storage medium.

BACKGROUND

In Release 17 of the 3rd generation partnership project (3GPP) new radio (NR) system, a codebook-based uplink multiple input multiple output (MIMO) transmission supports 4 antenna ports and up to 4 layers.

In actual applications, customer premise equipment (CPE)/fixed wireless access (FWA)/vehicle/industrial and other application scenarios all have high throughput requirements for uplink transmission. However, traditional uplink transmission only supports a codebook with a maximum of 4 antenna ports and up to 4 layers, which obviously cannot satisfy requirements of the above application scenarios.

BRIEF SUMMARY

Embodiments of the present application provide methods and apparatuses for uplink transmission, a terminal, a network device and a storage medium, to solve a defect that traditional uplink transmission cannot satisfy a high throughput requirement.

An embodiment of the present application provides a method for uplink transmission, including:

receiving precoding matrix indication information;

determining, from candidate precoding matrices, a precoding matrix indicated by the precoding matrix indication information, where the candidate precoding matrices include a first-type matrix and/or a second-type matrix, the first-type matrix is determined based on full-coherent codewords and a zero matrix, and the second-type matrix is determined based on partial-coherent codewords or non-coherent codewords; and

performing uplink transmission based on the precoding matrix.

In an embodiment, the first-type matrix is a combination of a matrix W and a matrix Z,

in case that $2^N$ uplink antenna ports exist in each coherent transmission group, the matrix W includes a matrix in full-coherent codewords for uplink $2^i$ antenna ports, and the matrix Z includes a zero matrix with 2’ rows,

where N is a positive integer, $N < \log_2 P$, P is a total quantity of uplink antenna ports, and a value of i is at least one integer from 1 to N.

In an embodiment, in case that $2^K$ uplink antenna ports exist in each coherent transmission group, the first-type matrix is obtained by selecting a combined matrix obtained by any combination of the matrix W and the matrix Z based on through at least one of the following rules:

the matrix W is a matrix in full-coherent codewords for uplink $2^K$ antenna ports, and a difference in quantities of non-zero elements in different rows of the combined matrix is less than or equal to 1; or

the matrix W is a matrix in full-coherent codewords for uplink $2^j$ antenna ports, and a quantity of non-zero elements in each row of the combined matrix is less than or equal to 2,

where K is an integer, $1 < K < \log_2 P$, and a value of j is at least one integer from 1 to K; and

in case that two uplink antenna ports exist in each coherent transmission group, the first-type matrix is obtained by selecting a combined matrix obtained by any combination of the matrix W and the matrix Z based on the following rules: a quantity of non-zero elements in each row of the combined matrix is less than or equal to 2, and a difference in quantities of non-zero elements in different rows of the combined matrix is less than or equal to 1.

In an embodiment, the second-type matrix is $\frac{1}{\sqrt{2}}\begin{bmatrix}A\\B\end{bmatrix}$, where both the matrix A and the matrix B are matrices in partial-coherent codewords for uplink P/2 antenna ports, or both the matrix A and the matrix B are matrices in non-coherent codewords for uplink P/2 antenna ports.

In an embodiment, the candidate precoding matrices further include a third-type matrix, and the third-type matrix is a matrix with only one non-zero element in each row and each column.

In an embodiment, the third-type matrix is obtained by selecting any candidate matrix with only one non-zero element in each row and each column based on any one or more of the following rules:

serial numbers of rows in which non-zero elements of the candidate matrix are located are continuous;

an interval between serial numbers of rows in which non-zero elements in adjacent columns of the candidate matrix are located is P/2;

an interval between serial numbers of rows in which non-zero elements in adjacent columns of the candidate matrix are located is P/2-1; or

an interval between serial numbers of rows in which non-zero elements in adjacent columns of the candidate matrix are located is P/2-2,

where P is a total quantity of uplink antenna ports.

In an embodiment, the candidate precoding matrix is determined based on the following steps:

determining a quantity M of target candidate matrices, and obtaining multiple initial matrix combinations consisting of each M initial precoding matrices in an initial precoding matrix set;

determining an intra-group matrix difference value of each initial matrix combination based on a chordal distance between every two initial precoding matrices in each initial matrix combination; and

selecting, based on intra-group matrix difference values of multiple initial matrix combinations, a candidate matrix combination from the multiple initial matrix combinations, and determining M initial precoding matrices in the candidate matrix combination as the candidate precoding matrices.

An embodiment of the present application further provides a method for uplink transmission, including:

generating precoding matrix indication information based on a precoding matrix in candidate precoding matrices, where the candidate precoding matrices include a first-type matrix and/or a second-type matrix, where the first-type matrix is determined based on full-coherent codewords and a zero matrix, and the second-type matrix is determined based on partial-coherent codewords or non-coherent codewords; and

transmitting the precoding matrix indication information to a terminal, where the precoding matrix indication information is used to indicate the precoding matrix, and the precoding matrix is used for uplink transmission.

In an embodiment, the first-type matrix is a combination of a matrix W and a matrix Z,

in case that $2^N$ uplink antenna ports exist in each coherent transmission group, the matrix W includes a matrix in full-coherent codewords for uplink $2^i$ antenna ports, and the matrix Z includes a zero matrix with $2^i$ rows,

where N is a positive integer, $N < \log_2 P$, P is a total quantity of uplink antenna ports, and a value of i is at least one integer from 1 to N.

In an embodiment, in case that $2^K$ uplink antenna ports exist in each coherent transmission group, the first-type matrix is obtained by selecting a combined matrix obtained by any combination of the matrix W and the matrix Z based on at least one of the following rules:

the matrix W is a matrix in full-coherent codewords for uplink $2^K$ antenna ports, and a difference in quantities of non-zero elements in different rows of the combined matrix is less than or equal to 1; or

the matrix W is a matrix in full-coherent codewords for uplink $2^j$ antenna ports, and a quantity of non-zero elements in each row of the combined matrix is less than or equal to 2,

where K is an integer, $1 < K < \log_2 P$, and a value of j is at least one integer from 1 to K; and

in case that two uplink antenna ports exist in each coherent transmission group, the first-type matrix is obtained by selecting a combined matrix obtained by any combination of the matrix W and the matrix Z based on the following rules: a quantity of non-zero elements in each row of the combined matrix is less than or equal to 2, and a difference in quantities of non-zero elements in different rows of the combined matrix is less than or equal to 1.

In an embodiment, the second-type matrix is $\frac{1}{\sqrt{2}}\begin{bmatrix}A\\B\end{bmatrix}$, where both the matrix A and the matrix B are matrices in partial-coherent codewords for uplink P/2 antenna ports, or both the matrix A and the matrix B are matrices in non-coherent codewords for uplink P/2 antenna ports.

In an embodiment, the candidate precoding matrix further includes a third-type matrix, and the third-type matrix is a matrix with only one non-zero element in each row and each column.

In an embodiment, the third-type matrix is obtained by selecting any candidate matrix with only one non-zero element in each row and each column based on any one or more of the following rules:

serial numbers of rows in which non-zero elements of the candidate matrix are located are continuous;

an interval between serial numbers of rows in which non-zero elements in adjacent columns of the candidate matrix are located is P/2;

an interval between serial numbers of rows in which non-zero elements in adjacent columns of the candidate matrix are located is P/2-1; or

an interval between serial numbers of rows in which non-zero elements in adjacent columns of the candidate matrix are located is P/2-2,

where P is a total quantity of uplink antenna ports.

In an embodiment, the candidate precoding matrix is determined based on the following steps:

determining a quantity M of target candidate matrices, and obtaining multiple initial matrix combinations consisting of each M initial precoding matrices in an initial precoding matrix set;

determining an intra-group matrix difference value of each initial matrix combination based on a chordal distance between every two initial precoding matrices in each initial matrix combination; and

selecting, based on intra-group matrix difference values of multiple initial matrix combinations, a candidate matrix combination from the multiple initial matrix combinations, and determining M initial precoding matrices in the candidate matrix combination as the candidate precoding matrices.

An embodiment of the present application further provides a terminal, including a memory, a transceiver and a processor,
where the memory is used for storing a computer program, the transceiver is used for receiving and transmitting data under control of the processor, and the processor is used for reading the computer program in the memory and performing steps of the method for uplink transmission described above.

An embodiment of the present application further provides a network device, including a memory, a transceiver and a processor,
where the memory is used for storing a computer program, the transceiver is used for receiving and transmitting data under control of the processor, and the processor is used for reading the computer program in the memory and performing steps of the method for uplink transmission described above.

An embodiment of the present application further provides a processor-readable storage medium, where the processor-readable storage medium stores a computer program, and the computer program is used to cause the processor to perform steps of the method for uplink transmission described above.

In the methods and apparatuses for uplink transmission, the terminal, the network device, apparatus and the storage medium provided by embodiments of the present application, the first-type matrix determined based on full-coherent codewords and a zero matrix, and/or the second-type matrix determined based on partial-coherent codewords or non-coherent codewords are adopted to form the candidate precoding matrices. Therefore, the precoding matrix is determined from the candidate precoding matrices, to perform precoding of uplink transmission. Since full-coherent codewords, partial-coherent codewords and non-coherent codewords may be directly obtained from a traditional codebook, the candidate precoding matrices may be quickly and conveniently obtained from combinations of the codewords, thereby supporting uplink parallel transmission of more antenna ports and more layers to satisfy the high throughput requirement.

## BRIEF DESCRIPTION OF THE DRAWINGS

In order to illustrate the solutions in the embodiments of the present application or in the related art more clearly, the drawings used in the description of the embodiments or the related art are briefly described below. The drawings in the following description are only some embodiments of the present application, and other drawings may be obtained according to these drawings without any creative work for those skilled in the art.

FIG. 1 is a first schematic flowchart of a method for uplink transmission according to an embodiment of the present application;

FIG. 2 is a second schematic flowchart of a method for uplink transmission according to an embodiment of the present application;

FIG. 3 is a schematic structural diagram of a terminal according to an embodiment of the present application;

FIG. 4 is a schematic structural diagram of a network device according to an embodiment of the present application;

FIG. 5 is a first schematic structural diagram of an apparatus for uplink transmission according to an embodiment of the present application; and

FIG. 6 is a second schematic structural diagram of an apparatus for uplink transmission according to an embodiment of the present application.

## DETAILED DESCRIPTION

In the embodiments of the present application, the term "and/or" describes a related relationship of associated objects, and indicates that there may be three kinds of relationships. For example, A and/or B may represent that A exists alone, A and B exist simultaneously, and B exists alone. Character "/" generally indicates that the associated objects have an "or" relationship.

In the embodiments of the present application, the term "multiple" refers to two or more, and other quantifiers are similar.

Solutions in embodiments of the present application are clearly and completely described in the following with reference to accompanying drawings in the embodiments of the present application. These embodiments are only a part of the embodiments of the present application, and not all of the embodiments. All other embodiments obtained by a person of ordinary skill in the art based on the embodiments of the present application without any creative work belong to the scope of the present application.

In the related art, an uplink transmission scheme is usually implemented based on a codebook, and specifically implemented through a multi-antenna transmission technology that determines an uplink transmission precoding matrix based on a fixed codebook.

A traditional new radio (NR) system uplink transmission supports two waveforms: discrete Fourier transform (DFT)-single-carrier frequency-division multiple access (S-OFDM) waveform and cyclic prefix orthogonal frequency division multiplexing (CP-OFDM) waveform. The two waveforms have different applicable scenarios and characteristics, and factors considered in codebook design are also different.

Uplink transmission based on the DFT-S-OFDM is mainly used in edge coverage scenarios with limited power, and only supports a single-stream data transmission, which requires a special design for a single-stream codebook. The CP-OFDM may support up to a 4-stream parallel transmission, which requires a design for a codebook up to 4 streams.

For a multiple input multiple output (MIMO) transmission of a terminal, characteristics of its transmission antenna and its radio frequency are quite different from those of the network device, and a design for a codebook needs to fully consider correlation characteristics between antennas. In case that two antenna ports satisfy a coherent transmission condition, that is, a transmission path of each antenna unit may be adjusted to a fixed power and phase difference, the terminal may use the two antenna ports to simultaneously transmit data on a same layer through precoding, thereby obtaining array gain. However, due to influences of factors such as a mutual coupling effect of antenna array elements, feeder differences, and changes in an amplifier phase and gain of a radio frequency path, in actual applications, there are inevitably differences in power and phase between antenna ports of the terminal. Due to cost and design constraints, not all terminals can calibrate each antenna port to an extent that each antenna port satisfies a coherent transmission requirement. Antenna ports that cannot perform coherent transmission may transmit data on different transmission layers simultaneously. Therefore, a codebook design for uplink transmission needs to consider antenna coherent transmission capabilities of the terminal.

In the NR system, three types of antenna coherent transmission capabilities of the terminal are defined.

Full-coherent: all antennas may perform coherent transmission.

Partial-coherent: antennas in a same coherent transmission group can perform coherent transmission, and coherent transmission cannot be performed between coherent transmission groups. Each coherent transmission group includes two antennas.

Non-coherent: no antenna may perform coherent transmission.

Considering a diversity of antenna structures of the terminal, a design of an uplink codebook is not based on any specific antenna structure assumption and correlation assumption. The uplink codebook should include codewords for an antenna partial-coherent transmission and an antenna non-coherent transmission to be used for terminals with partial-coherent transmission capability or non-coherent transmission capability.

Currently, a 4-antenna codebook using the DFT-S-OFDM waveform is designed based on a codebook for a long term evolution (LTE) uplink 4-antenna single-stream transmission. A codebook for LTE uplink 4-antenna single-stream transmission includes 16 codewords for a 4-antenna full-coherent transmission and 8 codewords for a partial antenna coherent transmission. The codeword for the partial antenna coherent transmission includes two coherent transmission antenna groups: antenna 1 and antenna 3 are taken as one group, and antenna 2 and antenna 4 are taken as one group. A 4-antenna codebook based on the DFT-S-OFDM waveform for the NR adds 4 single-antenna selection codewords on the basis of the LTE uplink 4-antenna single-stream transmission codebook, which is used to select terminals and antennas with non-coherent transmission capabilities.

When using the CP-OFDM, all codewords for antenna coherent transmission in a codebook for an uplink 4-antenna single-stream transmission are codewords after uniformly performing codeword group downsampling on an NR Type I downlink 4-antenna single-stream transmission codebook with CodebookMode=1 and L=1, that is, an oversampling factor O1 is set to 2, for a total of 16 codewords. Codewords for a partial antenna coherent transmission use the 8 codewords for the partial antenna coherent transmission in the LTE uplink 4-antenna single-stream transmission codebook. Codewords for a non-coherent transmission are all codewords for 4 single-antenna selection.

When using the CP-OFDM, all codewords for antenna coherent transmission in a codebook for a 4-antenna 2-stream transmission are obtained by uniformly performing codeword group downsampling on an NR Type I downlink 4-antenna 2-stream transmission codebook with CodebookMode=1 and L=1, that is, the oversampling factor O1 is set to 2, intra-group codewords are also downsampled, and $i_{1,3}$ is fixed to 0, for a total of 8 codewords. Codewords for a partial antenna coherent transmission are composed of codewords in an LTE uplink 4-antenna 2-stream transmission codebook, which take antenna 1 and antenna 2 as one group of coherent transmission antenna group and take antenna 3 and antenna 4 as one group of coherent transmission antenna group. In order to keep consistent with grouping of coherent transmission antenna groups corresponding to the codewords for the partial antenna coherent transmission in the codebook for 4-antenna single-stream transmission, in the NR, coefficients of antenna 2 and antenna 3 in the codewords for the partial antenna coherent transmission in the LTE uplink 4-antenna single-stream transmission codebook are interchanged and used in a codebook for 4-antenna 2-stream transmission when using the CP-OFDM waveform. The codewords for the non-coherent transmission are all codewords for a non-coherent transmission of six 2-stream antennas.

When using the CP-OFDM, all codewords for antenna coherent transmission in a codebook for an uplink 4-antenna 3-stream transmission are obtained by uniformly performing codeword group downsampling on an NR Type I downlink 4-antenna 2-stream transmission codebook with CodebookMode=1~2 and L=1, that is, the oversampling factor O1 is set to 2, intra-group codewords are also downsampled, a value range of $i_{1,1}$ is limited to {0, 2}, and $i_{1,3}$ is fixed to 0, for a total of 4 codewords. The codewords for the partial antenna coherent transmission are 2 codewords selected from an LTE R10 uplink codebook, which correspond to codewords taking antenna 1 and antenna 3 as one group of coherent transmission antenna group and taking antenna 2 and antenna 4 as one group of coherent transmission antenna group.

When using the CP-OFDM, all codewords for antenna coherent transmission in a codebook for a 4-antenna 4-stream transmission are only two, which are obtained by uniformly performing codeword group downsampling on an NR Type I downlink 4-antenna 4-stream transmission codebook with CodebookMode=1~2 and L=1, that is, the oversampling factor O1 is set to 2, intra-group codewords are also downsampled, $i_{1,1}$ is set to 0, and $i_{1,3}$ is fixed to 0, for a total of 2 codewords. A quantity of the codewords for the partial antenna coherent transmission is also 2, which correspond to codewords taking antenna 1 and antenna 3 as one group of coherent transmission antenna group and taking antenna 2 and antenna 4 as one group of coherent transmission antenna group. The codewords for the antenna non-coherent transmission are the same as a codebook for an LTE uplink 4-antenna 4-stream transmission, with only one unit array codeword.

In summary, a traditional uplink transmission only supports a codebook with a maximum of 4 antenna ports and up to 4 layers, and therefore cannot satisfy requirements of various application scenarios.

To solve this problem, the present application provides a method for uplink transmission to improve uplink transmission performance. FIG. 1 is a first schematic flowchart of a method for uplink transmission according to an embodiment of the present application. As shown in FIG. 1, the method is performed by a terminal, and the method includes the following steps.

Step 110: receiving precoding matrix indication information.

Here, the precoding matrix indication information is transmitted from a network device to the terminal. The precoding matrix indication information is used to indicate a precoding matrix applied for uplink transmission. The precoding matrix indication information may carry an index of the precoding matrix used for uplink transmission, so that the terminal may determine the precoding matrix from a codebook stored for uplink transmission. It may be understood that the codebook used for uplink transmission here is pre-agreed by the network device and the terminal.

Step 120: determining, from candidate precoding matrices, a precoding matrix indicated by the precoding matrix indication information, where the candidate precoding matrices include a first-type matrix and/or a second-type matrix, the first-type matrix is determined based on full-coherent codewords and a zero matrix, and the second-type matrix is determined based on partial-coherent codewords or non-coherent codewords.

In an embodiment, the candidate precoding matrix is a precoding matrix that may be used for uplink transmission in the codebook for uplink transmission. There may be multiple candidate precoding matrices, and the codebook for uplink transmission may include candidate precoding matrices for performing partial-coherent transmission, and may further include candidate precoding matrices for performing non-coherent transmission.

In order to support uplink parallel transmission with more antenna ports and more layers, the candidate precoding matrices in the embodiment of the present application includes at least the first-type matrix and/or the second-type matrix, where both the first-type matrix and the second-type matrix are precoding matrices for partial-coherent transmission over P uplink antenna ports, where P is a total quantity of uplink antenna ports included in the terminal.

The first-type matrix is a precoding matrix formed by any combination of full-coherent codewords and a zero matrix. Here, a quantity of uplink antenna ports corresponding to the full-coherent codewords is related to a quantity of uplink antenna ports included in each coherent transmission group owned by the terminal. For example, in case that a coherent transmission group includes 4 uplink antenna ports, full-coherent codewords used to form the first-type matrix may be full-coherent codewords for uplink 4 antennas, or full-coherent codewords for uplink 2 antennas, or both full-coherent codewords for uplink 4 antennas and full-coherent codewords for uplink 2 antennas.

The second-type matrix is determined based on partial-coherent codewords or non-coherent codewords. Furthermore, the second-type matrix may be determined based on concatenating of two partial-coherent codewords, or the second-type matrix may be determined based on concatenating of two non-coherent codewords. When determining the second-type matrix, whether to apply partial-coherent codewords or non-coherent codewords may be related to a quantity of uplink antenna ports included in each coherent transmission group owned by the terminal. For example, if the coherent transmission group includes 4 uplink antenna ports, the second-type matrix may be constructed by partial-coherent codewords for two uplink 4 antenna ports; if the coherent transmission group includes 2 uplink antenna ports, the second-type matrix may be constructed by non-coherent codewords for two uplink 4 antenna ports.

It may be understood that both the first-type matrix and the second-type matrix may be obtained based on full-coherent codewords in a traditional codebook, or based on partial-coherent codewords or non-coherent codewords in a traditional codebook. Therefore, a codebook for supporting uplink parallel transmission with more antenna ports and more layers may be designed by applying codewords in a traditional codebook supporting uplink parallel transmission with fewer antenna ports and fewer layers. For example, a candidate precoding matrix for uplink parallel transmission with 8 antenna ports and 8 layers may be designed by applying codewords in a codebook for uplink parallel transmission with 4 antenna ports and 4 layers.

In case that the codebook is sufficient to provide rich candidate precoding matrices capable of supporting uplink parallel transmission with more antenna ports and more layers, after receiving the precoding matrix indication information, the terminal only needs to select the candidate precoding matrix indicated by the precoding matrix indication information from the candidate precoding matrices as a precoding matrix for subsequent uplink transmission.

Step 130: performing uplink transmission based on the precoding matrix.

In an embodiment, after determining the precoding matrix for uplink transmission, the terminal may perform a precoding operation on to-be-transmitted information by applying the precoding matrix, and transmit the information subjected to the precoding operation, thereby performing uplink transmission.

In the method provided by the embodiment of the present application, the first-type matrix determined based on full-coherent codewords and a zero matrix, and/or the second-type matrix determined based on partial-coherent codewords or non-coherent codewords are adopted to form the candidate precoding matrices. Therefore, the precoding matrix is determined from the candidate precoding matrices, to perform precoding of uplink transmission. Since full-coherent codewords, partial-coherent codewords and non-coherent codewords may be directly obtained from a traditional codebook, the candidate precoding matrices may be quickly and conveniently obtained from combinations of the codewords, thereby supporting uplink parallel transmission of more antenna ports and more layers to satisfy the high throughput requirement.

Based on the above embodiment, the first-type matrix is a combination of a matrix W and a matrix Z,

in case that $2^N$ uplink antenna ports exist in each coherent transmission group, the matrix W includes a matrix in full-coherent codewords for uplink $2^i$ antenna ports, and the matrix Z includes a zero matrix with $2^i$ rows,
where N is a positive integer, $N < \log_2 P$, P is a total quantity of uplink antenna ports, and a value of i is at least one integer from 1 to N.

In an embodiment, the antenna ports used for uplink transmission of the terminal may be divided into coherent transmission groups based on coherent transmission capabilities, and a quantity of uplink antenna ports in each coherent transmission group is consistent. For example, 8 antenna ports may be divided into 2 coherent transmission groups, where each coherent transmission group contains 4 uplink antenna ports. For another example, 8 antenna ports may be divided into 4 coherent transmission groups, where each coherent transmission group contains 2 uplink antenna ports. For another example, 16 antenna ports may be divided into 2 coherent transmission groups, where each coherent transmission group contains 8 uplink antenna ports. The embodiments of the present application do not specifically limit this.

It may be understood that at least 2 uplink antenna ports exist in each coherent transmission group, and a quantity of uplink antenna ports existing in the coherent transmission group is an exponent of 2, such as 2, 4, 8, etc., and the quantity of uplink antenna ports existing in each coherent transmission group is less than a total quantity P of uplink antenna ports of the terminal. Therefore, $2^N$ uplink antenna ports may exist in each coherent transmission group, where N is a positive integer. Considering a case of partial coherence, antenna ports for uplink transmission are divided into at least two coherent transmission groups, therefore $N < \log_2 P$.

In this case, for construction of the first-type matrix, the full-coherent codewords and the zero matrix need to satisfy the following conditions.

The first-type matrix is any combination of full-coherent codewords W for the uplink $2^i$ antenna ports and a zero matrix Z with $2^i$ rows.

The value of i is restricted by N, that is, i may be one or more integers from 1 to N. In other words, in case that $2^N$ uplink antenna ports exist in each coherent transmission group, the matrix W used to construct the first-type matrix may include matrices in the full-coherent codewords for antenna ports, where a quantity of the antenna ports is an exponent of 2 from 2 to $2^N$, and the matrix Z may include a zero matrix with rows, where a quantity of the rows is an exponent of 2 from 2 to $2^N$.

For example, the terminal is configured with 8 antenna ports, which are divided into 2 coherent transmission groups, and each coherent transmission group contains 4 antenna ports. The first-type matrix used for partial-coherent transmission may be a combination of all possible matrices or matrix transformations as follows:

$$\begin{bmatrix} W \\ Z \end{bmatrix}, \begin{bmatrix} Z \\ W \end{bmatrix}, \begin{bmatrix} W_1 & Z \\ Z & W_2 \end{bmatrix}, \begin{bmatrix} W_1 & Z & Z \\ Z & W_2 & Z \\ Z & Z & W_3 \end{bmatrix}, \begin{bmatrix} W_1 & Z & Z & Z \\ Z & W_2 & Z & Z \\ Z & Z & W_3 & Z \\ Z & Z & Z & W_4 \end{bmatrix}.$$

W, $W_1$, $W_2$, $W_3$ and $W_4$ are matrices in full-coherent codewords for 4 and/or 2 uplink antenna ports, and Z is a zero matrix with 4 and/or 2 rows.

The above matrix transformation refers to perform row transformation on the above matrix. For example, $W_1$ and

$W_2$ are expressed as $\begin{bmatrix} x_1 \\ x_2 \\ x_3 \\ x_4 \end{bmatrix}$, and matrix $\begin{bmatrix} W_1 & Z \\ Z & W_2 \end{bmatrix} = \begin{bmatrix} x_1 & 0 \\ x_2 & 0 \\ x_3 & 0 \\ x_4 & 0 \\ 0 & x_1 \\ 0 & x_2 \\ 0 & x_3 \\ 0 & x_4 \end{bmatrix}$. After row transformation is performed, the matrix may be $\begin{bmatrix} x_1 & 0 \\ x_2 & 0 \\ 0 & x_1 \\ 0 & x_2 \\ x_3 & 0 \\ x_4 & 0 \\ 0 & x_3 \\ 0 & x_4 \end{bmatrix}$.

For another example, the terminal is configured with 8 antenna ports, which are divided into 4 coherent transmission groups, and each coherent transmission group contains 2 antenna ports. The first-type matrix used for partial-coherent transmission may be a combination of all possible matrices or matrix transformations as follows:

$$\begin{bmatrix} W \\ Z \\ Z \\ Z \end{bmatrix}; \begin{bmatrix} Z \\ W \\ Z \\ Z \end{bmatrix}; \begin{bmatrix} Z \\ Z \\ W \\ Z \end{bmatrix}; \begin{bmatrix} Z \\ Z \\ Z \\ W \end{bmatrix}; \begin{bmatrix} W_1 & Z \\ Z & W_2 \\ Z & Z \\ Z & Z \end{bmatrix}; \begin{bmatrix} W_1 & Z \\ Z & Z \\ Z & W_2 \\ Z & Z \end{bmatrix}; \begin{bmatrix} W_1 & Z \\ Z & Z \\ Z & Z \\ Z & W_2 \end{bmatrix}; \begin{bmatrix} Z & Z \\ W_1 & Z \\ Z & W_2 \\ Z & Z \end{bmatrix}; \begin{bmatrix} Z & Z \\ W_1 & Z \\ Z & Z \\ Z & W_2 \end{bmatrix}; \begin{bmatrix} Z & Z \\ Z & Z \\ W_1 & Z \\ Z & W_2 \end{bmatrix};$$

$$\begin{bmatrix} W_1 & Z & Z \\ Z & W_2 & Z \\ Z & Z & W_3 \\ Z & Z & Z \end{bmatrix}; \begin{bmatrix} W_1 & Z & Z \\ Z & W_2 & Z \\ Z & Z & Z \\ Z & Z & W_3 \end{bmatrix}; \begin{bmatrix} W_1 & Z & Z \\ Z & Z & Z \\ Z & W_2 & Z \\ Z & Z & W_3 \end{bmatrix}; \begin{bmatrix} Z & Z & Z \\ W_1 & Z & Z \\ Z & W_2 & Z \\ Z & Z & W_3 \end{bmatrix}; \begin{bmatrix} W_1 & Z & Z & Z \\ Z & W_2 & Z & Z \\ Z & Z & W_3 & Z \\ Z & Z & Z & W_4 \end{bmatrix}.$$

W, $W_1$, $W_2$, $W_3$ and $W_4$ are matrices in full-coherent codewords for the two uplink antenna ports, and Z is a zero matrix with 2 rows.

The matrix transformation refers to perform row transformation on the above matrix. For example, $W_1$ and $W_2$ are expressed as $\begin{bmatrix} x_1 \\ x_2 \end{bmatrix}$, and matrix $\begin{bmatrix} W_1 & Z \\ Z & W_2 \\ Z & Z \\ Z & Z \end{bmatrix} = \begin{bmatrix} x_1 & 0 \\ x_2 & 0 \\ 0 & x_1 \\ 0 & x_2 \\ 0 & 0 \\ 0 & 0 \\ 0 & 0 \\ 0 & 0 \end{bmatrix}$. After row transformation is performed, the matrix may be

$$\begin{bmatrix} x_1 & 0 \\ 0 & x_1 \\ 0 & 0 \\ 0 & 0 \\ x_2 & 0 \\ 0 & x_2 \\ 0 & 0 \\ 0 & 0 \end{bmatrix}.$$

In the method provided by the embodiment of the present application, a first-type matrix is constructed by combining the matrix W and the matrix Z. Since the matrix W is a matrix in full-coherent codewords that may be directly obtained from a traditional codebook, and the matrix Z is a matrix that may be directly constructed, the difficulty of obtaining the matrix W and the matrix Z is very low. The cost of obtaining the first-type matrix based on the combination of the matrix W and the matrix Z is very low, and a rich variety of first-type matrices that may support uplink parallel transmission of more antenna ports and more layers may be obtained, thereby improving the flexibility of precoding matrix selection.

Considering that a quantity of the first-type matrices obtained by any combination is extremely large, in order to select candidate precoding matrices that are more suitable for uplink partial-coherent transmission, based on any of the above embodiments, the embodiment of the present application screens any combination of the matrix W and the matrix Z.

In case that $2^K$ uplink antenna ports exist in each coherent transmission group, the first-type matrix is obtained through at least one of the following rules based on a combined matrix obtained by any combination of the matrix W and the matrix Z:

the matrix W is a matrix in full-coherent codewords for uplink $2^K$ antenna ports, and a difference in quantities of non-zero elements in different rows of the combined matrix is less than or equal to 1; or

the matrix W is a matrix in full-coherent codewords for uplink $2^j$ antenna ports, and a quantity of non-zero elements in each row of the combined matrix is less than or equal to 2,

where K is an integer, $1 < K < \log_2 P$, and a value of j is at least one integer from 1 to K; and

in case that two uplink antenna ports exist in each coherent transmission group, the first-type matrix is obtained by selecting a combined matrix obtained by any combination of the matrix W and the matrix Z based on the following rules: a quantity of non-zero elements in each row of the combined matrix is less than or equal to 2, and a difference in quantities of non-zero elements in different rows of the combined matrix is less than or equal to 1.

In an embodiment, the value of N may be further divided into two cases. One case is that N is an integer greater than 1, that is, $1 < N < \log_2 P$. In this case, N is recorded as K, that is, K is an integer, and $1 < K < \log_2 P$. The other case is that N is 1, and in this case, $2^N = 2$.

For the first case, that is, $2^K$ uplink antenna ports exist in each coherent transmission group and $2^K \geq 4$, the following rules may be applied to select a combined matrix obtained by any combination of the matrix W and the matrix Z to obtain the first-type matrix.

The matrix W is a matrix in full-coherent codewords for uplink $2^K$ antenna ports, and a difference in quantities of non-zero elements in different rows of the combined matrix is less than or equal to 1.

In the first-type matrix obtained based on the above rules, the difference in the quantity of non-zero elements in different rows is less than or equal to 1, which may effectively limit a difference in transmit powers of different antenna ports during uplink transmission, thereby balancing a transmit power of each antenna port.

For example, in case that K=2, that is, 8 antenna ports are divided into 2 coherent transmission groups, and each coherent transmission group contains 4 antenna ports, its partial-coherent transmission codebook may be the following first-type matrix selected based on the above rules:

$$\begin{bmatrix} W_{4Tx,r1} \\ Z \end{bmatrix}, \begin{bmatrix} Z \\ W_{4Tx,r1} \end{bmatrix}, \begin{bmatrix} W_{4Tx,r1} & Z \\ Z & W_{4Tx,r1} \end{bmatrix}, \begin{bmatrix} W_{4Tx,r2} & Z \\ Z & W_{4Tx,r1} \end{bmatrix}, \begin{bmatrix} W_{4Tx,r1} & Z \\ Z & W_{4Tx,r2} \end{bmatrix},$$

$$\begin{bmatrix} W_{4Tx,r2} & Z \\ Z & W_{4Tx,r2} \end{bmatrix}, \begin{bmatrix} W_{4Tx,r3} & Z \\ Z & W_{4Tx,r2} \end{bmatrix}, \begin{bmatrix} W_{4Tx,r2} & Z \\ Z & W_{4Tx,r3} \end{bmatrix}, \begin{bmatrix} W_{4Tx,r3} & Z \\ Z & W_{4Tx,r3} \end{bmatrix},$$

$$\begin{bmatrix} W_{4Tx,r3} & Z \\ Z & W_{4Tx,r4} \end{bmatrix}, \begin{bmatrix} W_{4Tx,r4} & Z \\ Z & W_{4Tx,r3} \end{bmatrix}, \begin{bmatrix} W_{4Tx,r4} & Z \\ Z & W_{4Tx,r4} \end{bmatrix}.$$

$W_{mTx,rn}$ is a matrix in full-coherent codewords with n layers for uplink m antenna ports, and a quantity of rows of the zero matrix Z is 4.

For the first case, that is, $2^K$ uplink antenna ports exist in each coherent transmission group and $2^K \geq 4$, the following rules may also be applied to select a combined matrix obtained by any combination of the matrix W and the matrix Z to obtain the first-type matrix.

The matrix W is a matrix in full-coherent codewords for uplink $2^K$ antenna ports, a quantity of non-zero elements in each row of the combined matrix is less than or equal to 2, and a value of j is at least one integer from 1 to K.

**In** the first-type matrix obtained based on the above rules, the quantity of non-zero elements in each row is less than or equal to 2, which may ensure a low cubic metric, thereby ensuring the efficiency of a power amplifier at a terminal side.

For example, in case that K=2, that is, 8 antenna ports are divided into 2 coherent transmission groups, and each coherent transmission group contains 4 antenna ports, its partial-coherent transmission codebook may be the following first-type matrix selected based on the above rules:

$$\begin{bmatrix} W_{4Tx,r1} \\ Z \end{bmatrix}, \begin{bmatrix} Z \\ W_{4Tx,r1} \end{bmatrix}, \begin{bmatrix} W_{4Tx,r1} & Z \\ Z & W_{4Tx,r1} \end{bmatrix}, \begin{bmatrix} W_{4Tx,r2} & Z \\ Z & W_{4Tx,r1} \end{bmatrix}, \begin{bmatrix} W_{4Tx,r1} & Z \\ Z & W_{4Tx,r2} \end{bmatrix},$$

$$\begin{bmatrix} W_{4Tx,r2} & Z \\ Z & W_{4Tx,r2} \end{bmatrix}, \begin{bmatrix} W_{4Tx,r2} & Z & Z \\ Z & W_{2Tx,r2} & Z \\ Z & Z & W_{2Tx,r1} \end{bmatrix}, \begin{bmatrix} W_{4Tx,r2} & Z & Z \\ Z & W_{2Tx,r1} & Z \\ Z & Z & W_{2Tx,r2} \end{bmatrix},$$

$$\begin{bmatrix} W_{2Tx,r2} & Z & Z \\ Z & W_{2Tx,r1} & Z \\ Z & Z & W_{4Tx,r2} \end{bmatrix}, \begin{bmatrix} W_{2Tx,r1} & Z & Z \\ Z & W_{2Tx,r2} & Z \\ Z & Z & W_{4Tx,r2} \end{bmatrix}, \begin{bmatrix} W_{4Tx,r2} & Z & Z \\ Z & W_{2Tx,r2} & Z \\ Z & Z & W_{2Tx,r2} \end{bmatrix},$$

$$\begin{bmatrix} W_{2Tx,r2} & Z & Z \\ Z & W_{2Tx,r2} & Z \\ Z & Z & W_{4Tx,r2} \end{bmatrix}, \begin{bmatrix} W_{2Tx,r2} & Z & Z & Z \\ Z & W_{2Tx,r2} & Z & Z \\ Z & Z & W_{2Tx,r2} & Z \\ Z & Z & Z & W_{2Tx,r1} \end{bmatrix},$$

$$\begin{bmatrix} W_{2Tx,r2} & Z & Z & Z \\ Z & W_{2Tx,r2} & Z & Z \\ Z & Z & W_{2Tx,r1} & Z \\ Z & Z & Z & W_{2Tx,r2} \end{bmatrix}, \begin{bmatrix} W_{2Tx,r2} & Z & Z & Z \\ Z & W_{2Tx,r1} & Z & Z \\ Z & Z & W_{2Tx,r2} & Z \\ Z & Z & Z & W_{2Tx,r2} \end{bmatrix},$$

$$\begin{bmatrix} W_{2Tx,r1} & Z & Z & Z \\ Z & W_{2Tx,r2} & Z & Z \\ Z & Z & W_{2Tx,r2} & Z \\ Z & Z & Z & W_{2Tx,r2} \end{bmatrix}, \begin{bmatrix} W_{2Tx,r2} & Z & Z & Z \\ Z & W_{2Tx,r2} & Z & Z \\ Z & Z & W_{2Tx,r2} & Z \\ Z & Z & Z & W_{2Tx,r2} \end{bmatrix}.$$

$W_{mTx,rn}$ is a matrix in full-coherent codewords with n layers for uplink m antenna ports, and a quantity of rows of the zero matrix Z is 4 and/or 2.

For the second case, that is, two uplink antenna ports exist in each coherent transmission group, the following rules may be applied to select a combined matrix obtained by any combination of the matrix W and the matrix Z to obtain the first-type matrix.

A quantity of non-zero elements in each row of the combined matrix is less than or equal to 2, and a difference in quantities of non-zero elements in different rows of the combined matrix is less than or equal to 1.

By limiting the quantity of non-zero elements in each row and the difference in the quantity of non-zero elements in different rows, transmit powers of different antenna ports during uplink transmission may be effectively limited, thereby balancing a transmit power of each antenna port.

For example, in case that K=2, that is, 8 antenna ports are divided into 4 coherent transmission groups, and each coherent transmission group contains 2 antenna ports, its partial-coherent transmission codebook may be the following first-type matrix selected based on the above rules:

$$\begin{bmatrix} W_{2Tx,\ r1} \\ Z \\ Z \\ Z \end{bmatrix}, \begin{bmatrix} Z \\ W_{2Tx,\ r1} \\ Z \\ Z \end{bmatrix}, \begin{bmatrix} Z \\ Z \\ W_{2Tx,\ r1} \\ Z \end{bmatrix}, \begin{bmatrix} Z \\ Z \\ Z \\ W_{2Tx,\ r1} \end{bmatrix}, \begin{bmatrix} W_{2Tx,\ r1} & Z \\ Z & W_{2Tx,\ r1} \\ Z & Z \\ Z & Z \end{bmatrix},$$

$$\begin{bmatrix} W_{2Tx,\ r1} & Z \\ Z & Z \\ Z & W_{2Tx,\ r1} \\ Z & Z \end{bmatrix}, \begin{bmatrix} W_{2Tx,\ r1} & Z \\ Z & Z \\ Z & Z \\ Z & W_{2Tx,\ r1} \end{bmatrix}, \begin{bmatrix} Z & Z \\ W_{2Tx,\ r1} & Z \\ Z & W_{2Tx,\ r1} \\ Z & Z \end{bmatrix}, \begin{bmatrix} Z & Z \\ W_{2Tx,\ r1} & Z \\ Z & Z \\ Z & W_{2Tx,\ r1} \end{bmatrix},$$

$$\begin{bmatrix} Z & Z \\ Z & Z \\ W_{2Tx,\ r1} & Z \\ Z & W_{2Tx,\ r1} \end{bmatrix}, \begin{bmatrix} W_{2Tx,\ r1} & Z & Z \\ Z & W_{2Tx,\ r1} & Z \\ Z & Z & W_{2Tx,\ r1} \\ Z & Z & Z \end{bmatrix}, \begin{bmatrix} W_{2Tx,\ r1} & Z & Z \\ Z & W_{2Tx,\ r1} & Z \\ Z & Z & Z \\ Z & Z & W_{2Tx,\ r1} \end{bmatrix},$$

$$\begin{bmatrix} W_{2Tx,\ r1} & Z & Z \\ Z & Z & Z \\ Z & W_{2Tx,\ r1} & Z \\ Z & Z & W_{2Tx,\ r1} \end{bmatrix}, \begin{bmatrix} Z & Z & Z \\ W_{2Tx,\ r1} & Z & Z \\ Z & W_{2Tx,\ r1} & Z \\ Z & Z & W_{2Tx,\ r1} \end{bmatrix},$$

$$\begin{bmatrix} W_{2Tx,\ r1} & Z & Z & Z \\ Z & W_{2Tx,\ r1} & Z & Z \\ Z & Z & W_{2Tx,\ r1} & Z \\ Z & Z & Z & W_{2Tx,\ r1} \end{bmatrix}, \begin{bmatrix} W_{2Tx,\ r2} & Z & Z & Z \\ Z & W_{2Tx,\ r1} & Z & Z \\ Z & Z & W_{2Tx,\ r1} & Z \\ Z & Z & Z & W_{2Tx,\ r1} \end{bmatrix},$$

$$\begin{bmatrix} W_{2Tx,\ r1} & Z & Z & Z \\ Z & W_{2Tx,\ r2} & Z & Z \\ Z & Z & W_{2Tx,\ r1} & Z \\ Z & Z & Z & W_{2Tx,\ r1} \end{bmatrix}, \begin{bmatrix} W_{2Tx,\ r1} & Z & Z & Z \\ Z & W_{2Tx,\ r1} & Z & Z \\ Z & Z & W_{2Tx,\ r2} & Z \\ Z & Z & Z & W_{2Tx,\ r1} \end{bmatrix},$$

$$\begin{bmatrix} W_{2Tx,\ r1} & Z & Z & Z \\ Z & W_{2Tx,\ r1} & Z & Z \\ Z & Z & W_{2Tx,\ r1} & Z \\ Z & Z & Z & W_{2Tx,\ r2} \end{bmatrix}, \begin{bmatrix} W_{2Tx,\ r2} & Z & Z & Z \\ Z & W_{2Tx,\ r2} & Z & Z \\ Z & Z & W_{2Tx,\ r1} & Z \\ Z & Z & Z & W_{2Tx,\ r1} \end{bmatrix},$$

$$\begin{bmatrix} W_{2Tx,\ r2} & Z & Z & Z \\ Z & W_{2Tx,\ r1} & Z & Z \\ Z & Z & W_{2Tx,\ r2} & Z \\ Z & Z & Z & W_{2Tx,\ r1} \end{bmatrix}, \begin{bmatrix} W_{2Tx,\ r2} & Z & Z & Z \\ Z & W_{2Tx,\ r1} & Z & Z \\ Z & Z & W_{2Tx,\ r1} & Z \\ Z & Z & Z & W_{2Tx,\ r2} \end{bmatrix},$$

$$\begin{bmatrix} W_{2Tx,\ r1} & Z & Z & Z \\ Z & W_{2Tx,\ r2} & Z & Z \\ Z & Z & W_{2Tx,\ r2} & Z \\ Z & Z & Z & W_{2Tx,\ r1} \end{bmatrix}, \begin{bmatrix} W_{2Tx,\ r1} & Z & Z & Z \\ Z & W_{2Tx,\ r2} & Z & Z \\ Z & Z & W_{2Tx,\ r1} & Z \\ Z & Z & Z & W_{2Tx,\ r2} \end{bmatrix},$$

$$\begin{bmatrix} W_{2Tx,\ r1} & Z & Z & Z \\ Z & W_{2Tx,\ r1} & Z & Z \\ Z & Z & W_{2Tx,\ r2} & Z \\ Z & Z & Z & W_{2Tx,\ r2} \end{bmatrix}, \begin{bmatrix} W_{2Tx,\ r2} & Z & Z & Z \\ Z & W_{2Tx,\ r2} & Z & Z \\ Z & Z & W_{2Tx,\ r2} & Z \\ Z & Z & Z & W_{2Tx,\ r1} \end{bmatrix},$$

$$\begin{bmatrix} W_{2Tx,\ r2} & Z & Z & Z \\ Z & W_{2Tx,\ r2} & Z & Z \\ Z & Z & W_{2Tx,\ r1} & Z \\ Z & Z & Z & W_{2Tx,\ r2} \end{bmatrix}, \begin{bmatrix} W_{2Tx,\ r2} & Z & Z & Z \\ Z & W_{2Tx,\ r1} & Z & Z \\ Z & Z & W_{2Tx,\ r2} & Z \\ Z & Z & Z & W_{2Tx,\ r2} \end{bmatrix},$$

$$\begin{bmatrix} W_{2Tx,\ r1} & Z & Z & Z \\ Z & W_{2Tx,\ r2} & Z & Z \\ Z & Z & W_{2Tx,\ r2} & Z \\ Z & Z & Z & W_{2Tx,\ r2} \end{bmatrix}, \begin{bmatrix} W_{2Tx,\ r2} & Z & Z & Z \\ Z & W_{2Tx,\ r2} & Z & Z \\ Z & Z & W_{2Tx,\ r2} & Z \\ Z & Z & Z & W_{2Tx,\ r2} \end{bmatrix}.$$

$W_{2Tx,rn}$ is a matrix in full-coherent codewords with n layers for uplink 2 antenna ports, and a quantity of rows of the zero matrix Z is 2.

In the method provided by the embodiment of the present application, by limiting the quantity of antenna ports corresponding to the matrix W, and the quantity of non-zero elements and/or the difference in the quantity of non-zero elements in different rows in the combined matrix obtained by combining the matrix W and the matrix Z, a combined matrix of any combination of the matrix W and the matrix Z is selected. While ensuring that the first-type matrix may support uplink parallel transmission of more antenna ports and more layers, a size of the candidate precoding matrices is effectively controlled.

Based on any of the above embodiments, the second-type matrix is $\frac{1}{\sqrt{2}}\begin{bmatrix} A \\ B \end{bmatrix}$, where both the matrix A and the matrix B are matrices in partial-coherent codewords for uplink P/2 antenna ports, or both the matrix A and the matrix B are matrices in non-coherent codewords for uplink P/2 antenna ports.

In an embodiment, in the construction of the second-type matrix, it is necessary to refer to the partial-coherent codewords or the non-coherent codewords for the uplink P/2 antenna ports. Specific codewords used for constructing the second-type matrix still needs to be determined based on a quantity of uplink antenna ports included in each coherent transmission group owned by the terminal. In an embodiment, in case that the coherent transmission group contains P/2 antenna ports, both the matrix A and the matrix B are matrices in the partial-coherent codewords. In case that the quantity of antenna ports in the coherent transmission group is less than P/2, both the matrix A and the matrix B are matrices in the non-coherent codewords.

For example, in case that the terminal includes 8 antenna ports, which may be specifically divided into 2 coherent transmission groups, and each coherent transmission group contains 4 antenna ports, both the matrix A and the matrix B used for constructing the second-type matrix are matrices in partial-coherent codewords for uplink 4 antenna ports. For another example, in case that the terminal includes 8 antenna ports, which may be specifically divided into 4 coherent transmission groups, and each coherent transmission group contains 2 antenna ports, both the matrix A and the matrix B used for constructing the second-type matrix are matrices in non-coherent codewords for uplink 4 antenna ports.

In the method provided by the embodiment of the present application, partial-coherent codewords or non-coherent codewords are applied to construct the second-type matrix. Since both the partial-coherent codewords and the non-coherent codewords may be directly obtained from a traditional codebook, the candidate precoding matrices may be quickly and conveniently obtained from combinations of the codewords, thereby supporting uplink parallel transmission of more antenna ports and more layers to satisfy the high throughput requirement.

Based on any of the above embodiments, the candidate precoding matrix further includes a third-type matrix, and the third-type matrix is a matrix with only one non-zero element in each row and each column.

In an embodiment, considering that no antenna port that may perform coherent transmission may exist among the P uplink antenna ports for the terminal, that is, there may be a case that the terminal needs to perform non-coherent transmission, the candidate precoding matrices should also be provided with a precoding matrix for performing uplink non-coherent transmission of more antenna ports and more layers. In the embodiments of the present application, this type of precoding matrix used for non-coherent transmission is recorded as the third-type matrix.

Each row of the third-type matrix has only one non-zero element, and each column of the third-type matrix has only one non-zero element. The third-type matrix included in the precoding matrix may be a set of all possible matrices, or a set of matrices obtained by selecting based on a preset principle. The embodiments of the present application do not make specific limitations on this.

In the method provided by the embodiment of the present application, the third-type matrix for performing non-coherent transmission is provided as candidate precoding matrices, thereby ensuring that whether partial-coherent transmission or non-coherent transmission is performed, the terminal may obtain a suitable precoding matrix from the candidate precoding matrices to perform uplink parallel transmission of more antenna ports and more layers.

Considering that the quantity of matrices that satisfy the third-type matrix and have only one non-zero element in each row and each column is extremely large, in order to select candidate precoding matrices that are more suitable for uplink non-coherent transmission, based on any of the above embodiments, the embodiment of the present application screens any candidate matrix that has only one non-zero element in each row and each column.

The third-type matrix is obtained by selecting any candidate matrix with only one non-zero element in each row and each column based on any one or more of the following rules:

serial numbers of rows in which non-zero elements of the candidate matrix are located are continuous;

an interval between serial numbers of rows in which non-zero elements in adjacent columns of the candidate matrix are located is P/2;

an interval between serial numbers of rows in which non-zero elements in adjacent columns of the candidate matrix are located is P/2-1; or

an interval between serial numbers of rows in which non-zero elements in adjacent columns of the candidate matrix are located is P/2-2,

where P is a total quantity of uplink antenna ports.

In an embodiment, one of the above four rules may be applied to implement the selecting of the third-type matrix, or multiple of the above four rules may be selected and applied separately, and the candidate matrices selected based on each rule are all taken as the third-type matrix. The embodiments of the present application do not make specific limitations on this.

In the above rules, candidate matrices having continuous serial numbers of rows in which non-zero elements are located are selected as the third-type matrix, so that the serial numbers of occupied uplink antenna ports are continuous when the matrix is applied for precoding processing and transmitting a signal, which is more conducive to the convenience of configuring the corresponding uplink antenna ports. The third-type matrix is selected from the candidate matrix based on intervals between serial numbers of rows in which non-zero elements in adjacent columns are located, so that an anti-interference performance between adjacent uplink antenna ports is stronger when the matrix is applied for precoding processing and transmitting signals.

In the method provided by the embodiment of the present application, by limiting a continuity of the serial numbers of rows in which the non-zero elements in the third-type matrix are located and the intervals between serial numbers of rows in which non-zero elements in adjacent columns are located, the candidate matrices are selected. While ensuring that the third-type matrix may support uplink parallel transmission of more antenna ports and more layers, a size of the candidate precoding matrices is effectively controlled.

Based on any of the above embodiments, considering that the quantity of candidate precoding matrices generated based on the above method is relatively large, signaling overhead of transmitting the candidate precoding matrices between two devices will increase, and an algorithm complexity of selecting an optimal codebook and overhead of storing all candidate precoding matrix sets will also increase, in order to solve the problem of a large quantity of candidate precoding matrices, the size of the candidate precoding matrices may also be planned and restricted through the following steps:

determining a quantity M of target candidate matrices, and obtaining multiple initial matrix combinations consisting of each M initial precoding matrices in an initial precoding matrix set;

determining an intra-group matrix difference value of each initial matrix combination based on a chordal distance between every two initial precoding matrices in each initial matrix combination; and

selecting, based on intra-group matrix difference values of multiple initial matrix combinations, a candidate matrix combination from the multiple initial matrix combinations, and determining M initial precoding matrices in the candidate matrix combination as the candidate precoding matrices.

In an embodiment, the target candidate matrix quantity M is the total quantity of candidate precoding matrices that are expected to be ultimately applied to the method for uplink transmission. The initial precoding matrix set includes a large quantity of initial precoding matrices. The initial precoding matrix set may include the first-type matrix and/or the second-type matrix, and may further include the third-type matrix and the first-type matrix and/or the second-type matrix. The embodiments of the present application do not specifically limit this.

For an initial precoding matrix set having a large size, M may be used as a quantity of initial precoding matrices included in an initial matrix combination, and M initial precoding matrices are selected from the initial precoding matrix set to construct the initial matrix combination. It may be understood that the M initial precoding matrices here may be selected arbitrarily, so that the obtained initial matrix combination covers all possible combinations of the M initial precoding matrices.

After obtaining various initial matrix combinations, for each initial matrix combination, a difference value between each two initial precoding matrices in the initial matrix combination may be calculated, where a difference value between two initial precoding matrices may be expressed as a chordal distance between the two initial precoding matrices. After obtaining the chordal distance between each two initial precoding matrices in the initial matrix combination, an intra-group matrix difference value of the initial matrix combination may be determined based on the chordal distance, where the intra-group matrix difference value reflects a difference between each initial precoding matrix in the entire initial matrix combination in a unit of an initial matrix combination, and the intra-group matrix difference value may be an average of difference values between each two initial precoding matrices in the initial matrix combination, or a minimum of difference values between each two initial precoding matrices in the initial matrix combination. For example, the intra-group matrix difference value may be an average of chordal distances between each two initial precoding matrices in the initial matrix combination, or the intra-group matrix difference value may be a minimum of chordal distances between each two initial precoding matrices in the initial matrix combination. The embodiments of the present application do not specifically limit this.

After obtaining the intra-group matrix difference value of each initial matrix combination, the initial matrix combination with a largest intra-group matrix difference value may be selected from each of the above initial matrix combinations as a candidate matrix combination. It may be understood that the larger the intra-group matrix difference value, the greater the difference between initial precoding matrices in the initial matrix combination, and the more types and characteristics of the initial precoding matrices covered by the initial matrix combination. Therefore, an initial matrix combination with a largest matrix difference value is selected, that is, under the premise of a limited quantity M of initial precoding matrices, initial precoding matrices with the most types and characteristics are covered as much as possible to satisfy with various uplink transmission requirements.

After the candidate matrix combination is obtained, the M initial precoding matrices in the candidate matrix combination may be determined as the candidate precoding matrices.

In the method provided by the embodiment of the present application, the size and quantity of candidate precoding matrices are effectively limited, the algorithm complexity of precoding matrix selection is reduced, and the storage overhead of candidate precoding matrices is reduced.

Based on any of the above embodiments, in view of the limitation to the quantity of candidate precoding matrices, for each layer, the quantity of candidate precoding matrices may be reduced to a reasonable quantity M based on the following method.

Step 1: all combinations of M initial precoding matrices are selected from an initial precoding matrix set, i.e., an initial matrix combination.

Step 2: all combinations are traversed. For each combination, selecting 2 initial precoding matrices from the M initial precoding matrices have a total of $C_N^2$ combinations. Difference values between each two initial precoding matrices are calculated, that is, a chordal distance between each two initial precoding matrices is $\mathrm{d}(w_i, w_j) = \frac{1}{\sqrt{2}}\left\|w_i {w_i}^H - w_j {w_j}^H\right\|_F$. A minimum value of these $C_N^2$ chordal distances is then taken as an intra-group matrix difference value of the combination. Therefore, each combination corresponds to an intra-group matrix difference value, that is, a minimum chordal distance.

Step 3: all combinations are traversed to select a combination with a largest intra-group matrix difference value, that is, a candidate matrix combination finally applied to this layer. The combination includes M initial precoding matrices, and these M initial precoding matrices are candidate precoding matrices finally applied to this layer.

Based on any of the above embodiments, FIG. 2 is a second schematic flowchart of a method for uplink transmission according to an embodiment of the present application. As shown in FIG. 2, the method is performed by a network device, and the method includes the following steps.

Step 210: generating precoding matrix indication information based on a precoding matrix in candidate precoding matrices, where the candidate precoding matrices include a first-type matrix and/or a second-type matrix, where the first-type matrix is determined based on full-coherent codewords and a zero matrix, and the second-type matrix is determined based on partial-coherent codewords or non-coherent codewords.

In an embodiment, the candidate precoding matrix is a precoding matrix that may be used for uplink transmission in the codebook for uplink transmission. There may be multiple candidate precoding matrices, and the codebook for uplink transmission may include candidate precoding matrices for performing partial-coherent transmission, and may further include candidate precoding matrices for performing non-coherent transmission.

In order to support uplink parallel transmission with more antenna ports and more layers, the candidate precoding matrices in the embodiment of the present application includes at least the first-type matrix and/or the second-type matrix, where both the first-type matrix and the second-type matrix are precoding matrices for partial-coherent transmission over P uplink antenna ports, where P is a total quantity of uplink antenna ports included in the terminal.

The first-type matrix is a precoding matrix formed by any combination of full-coherent codewords and a zero matrix. Here, a quantity of uplink antenna ports corresponding to the full-coherent codewords is related to a quantity of uplink antenna ports included in each coherent transmission group owned by the terminal. For example, in case that a coherent transmission group includes 4 uplink antenna ports, full-coherent codewords used to form the first-type matrix may be full-coherent codewords for uplink 4 antennas, or full-coherent codewords for uplink 2 antennas, or both full-coherent codewords for uplink 4 antennas and full-coherent codewords for uplink 2 antennas.

The second-type matrix is determined based on partial-coherent codewords or non-coherent codewords. Furthermore, the second-type matrix may be determined based on concatenating of two partial-coherent codewords, or the second-type matrix may be determined based on concatenating of two non-coherent codewords. When determining the second-type matrix, whether to apply partial-coherent codewords or non-coherent codewords may be related to a quantity of uplink antenna ports included in each coherent transmission group owned by the terminal. For example, if the coherent transmission group includes 4 uplink antenna ports, the second-type matrix may be constructed by partial-coherent codewords for two uplink 4 antenna ports; if the coherent transmission group includes 2 uplink antenna ports, the second-type matrix may be constructed by non-coherent codewords for two uplink 4 antenna ports.

It may be understood that both the first-type matrix and the second-type matrix may be obtained based on full-coherent codewords in a traditional codebook, or based on partial-coherent codewords or non-coherent codewords in a traditional codebook. Therefore, a codebook for supporting uplink parallel transmission with more antenna ports and more layers may be designed by applying codewords in a traditional codebook supporting uplink parallel transmission with fewer antenna ports and fewer layers. For example, a candidate precoding matrix for uplink parallel transmission with 8 antenna ports and 8 layers may be designed by applying codewords in a codebook for uplink parallel transmission with 4 antenna ports and 4 layers.

In case that the codebook is sufficient to provide rich candidate precoding matrices capable of supporting uplink parallel transmission with more antenna ports and more layers, the network device may select a precoding matrix from the candidate precoding matrices and generate precoding matrix indication information for indicating the precoding matrix. The precoding matrix indication information is used to indicate the precoding matrix applied for uplink transmission, and the precoding matrix indication information may carry an index of the precoding matrix used for uplink transmission.

Step 220: transmitting the precoding matrix indication information to a terminal, where the precoding matrix indication information is used to indicate the precoding matrix, and the precoding matrix is used for uplink transmission.

In an embodiment, the network device may transmit the generated precoding matrix indication information to the terminal. After receiving the precoding matrix indication information, the terminal may select a candidate precoding matrix indicated by the precoding matrix indication information from the candidate precoding matrices as the precoding matrix for subsequent uplink transmission. After determining the precoding matrix for uplink transmission, the terminal may perform a precoding operation on to-be-transmitted information by applying the precoding matrix, and transmit the information subjected to the precoding operation, thereby performing uplink transmission.

In the method provided by the embodiment of the present application, the first-type matrix determined based on full-coherent codewords and a zero matrix, and/or the second-type matrix determined based on partial-coherent codewords or non-coherent codewords are adopted to form the candidate precoding matrices. Therefore, the precoding matrix is determined from the candidate precoding matrices, to perform precoding of uplink transmission. Since full-coherent codewords, partial-coherent codewords and non-coherent codewords may be directly obtained from a traditional codebook, the candidate precoding matrices may be quickly and conveniently obtained from combinations of the codewords, thereby supporting uplink parallel transmission of more antenna ports and more layers to satisfy the high throughput requirement.

Based on the above embodiment, the first-type matrix is a combination of a matrix W and a matrix Z,

in case that $2^N$ uplink antenna ports exist in each coherent transmission group, the matrix W includes a matrix in full-coherent codewords for uplink $2^i$ antenna ports, and the matrix Z includes a zero matrix with $2^i$ rows,

where N is a positive integer, $N < \log_2 P$, P is a total quantity of uplink antenna ports, and a value of i is at least one integer from 1 to N.

In an embodiment, the antenna ports used for uplink transmission of the terminal may be divided into coherent transmission groups based on coherent transmission capabilities, and a quantity of uplink antenna ports in each coherent transmission group is consistent. For example, 8 antenna ports may be divided into 2 coherent transmission groups, where each coherent transmission group contains 4 uplink antenna ports. For another example, 8 antenna ports may be divided into 4 coherent transmission groups, where each coherent transmission group contains 2 uplink antenna ports. For another example, 16 antenna ports may be divided into 2 coherent transmission groups, where each coherent transmission group contains 8 uplink antenna ports. The embodiments of the present application do not specifically limit this.

It may be understood that at least 2 uplink antenna ports exist in each coherent transmission group, and a quantity of uplink antenna ports existing in the coherent transmission group is an exponent of 2, such as 2, 4, 8, etc., and the quantity of uplink antenna ports existing in each coherent transmission group is less than a total quantity P of uplink antenna ports of the terminal. Therefore, $2^N$ uplink antenna ports may exist in each coherent transmission group, where N is a positive integer. Considering a case of partial coherence, antenna ports for uplink transmission are divided into at least two coherent transmission groups, therefore $N < \log_2 P$.

In this case, for construction of the first-type matrix, the full-coherent codewords and the zero matrix need to satisfy the following conditions.

The first-type matrix is any combination of full-coherent codewords W for the uplink $2^i$ antenna ports and a zero matrix Z with $2^i$ rows.

The value of i is restricted by N, that is, i may be one or more integers from 1 to N. In other words, in case that $2^N$ uplink antenna ports exist in each coherent transmission group, the matrix W used to construct the first-type matrix may include matrices in the full-coherent codewords for antenna ports, where a quantity of the antenna ports is an exponent of 2 from 2 to $2^N$, and the matrix Z may include a zero matrix with rows, where a quantity of the rows is an exponent of 2 from 2 to $2^N$.

In the method provided by the embodiment of the present application, a first-type matrix is constructed by combining the matrix W and the matrix Z. Since the matrix W is a matrix in full-coherent codewords that may be directly obtained from a traditional codebook, and the matrix Z is a matrix that may be directly constructed, the difficulty of obtaining the matrix W and the matrix Z is very low. The cost of obtaining the first-type matrix based on the combination of the matrix W and the matrix Z is very low, and a rich variety of first-type matrices that may support uplink parallel transmission of more antenna ports and more layers may be obtained, thereby improving the flexibility of precoding matrix selection.

Considering that a quantity of the first-type matrices obtained by any combination is extremely large, in order to select candidate precoding matrices that are more suitable for uplink partial-coherent transmission, based on any of the above embodiments, the embodiment of the present application screens any combination of the matrix W and the matrix Z.

In case that $2^K$ uplink antenna ports exist in each coherent transmission group, the first-type matrix is obtained by selecting a combined matrix obtained by any combination of the matrix W and the matrix Z based on at least one of the following rules:

the matrix W is a matrix in full-coherent codewords for uplink $2^K$ antenna ports, and a difference in quantities of non-zero elements in different rows of the combined matrix is less than or equal to 1; or

the matrix W is a matrix in full-coherent codewords for uplink $2^j$ antenna ports, and a quantity of non-zero elements in each row of the combined matrix is less than or equal to 2,

where K is an integer, $1 < K < \log_2 P$, and a value of j is at least one integer from 1 to K; and

in case that two uplink antenna ports exist in each coherent transmission group, the first-type matrix is obtained by selecting a combined matrix obtained by any combination of the matrix W and the matrix Z based on the following rules: a quantity of non-zero elements in each row of the combined matrix is less than or equal to 2, and a difference in quantities of non-zero elements in different rows of the combined matrix is less than or equal to 1.

In an embodiment, the value of N may be further divided into two cases. One case is that N is an integer greater than 1, that is, $1 < N < \log_2 P$. In this case, N is recorded as K, that is, K is an integer, and $1 < K < \log_2 P$. The other case is that N is 1, and in this case, $2^N = 2$.

For the first case, that is, $2^K$ uplink antenna ports exist in each coherent transmission group and $2^K \geq 4$, the following rules may be applied to select a combined matrix obtained by any combination of the matrix W and the matrix Z to obtain the first-type matrix.

The matrix W is a matrix in full-coherent codewords for uplink $2^K$ antenna ports, and a difference in quantities of non-zero elements in different rows of the combined matrix is less than or equal to 1.

In the first-type matrix obtained based on the above rules, the difference in the quantity of non-zero elements in different rows is less than or equal to 1, which may effectively limit a difference in transmit powers of different antenna ports during uplink transmission, thereby balancing a transmit power of each antenna port.

For the first case, that is, $2^K$ uplink antenna ports exist in each coherent transmission group and $2^K \geq 4$, the following rules may also be applied to select a combined matrix obtained by any combination of the matrix W and the matrix Z to obtain the first-type matrix.

The matrix W is a matrix in full-coherent codewords for uplink $2^K$ antenna ports, a quantity of non-zero elements in each row of the combined matrix is less than or equal to 2, and a value of j is at least one integer from 1 to K.

In the first-type matrix obtained based on the above rules, the quantity of non-zero elements in each row is less than or equal to 2, which may ensure a low cubic metric, thereby ensuring the efficiency of a power amplifier at a terminal side.

For the second case, that is, two uplink antenna ports exist in each coherent transmission group, the following rules may be applied to select a combined matrix obtained by any combination of the matrix W and the matrix Z to obtain the first-type matrix.

A quantity of non-zero elements in each row of the combined matrix is less than or equal to 2, and a difference in quantities of non-zero elements in different rows of the combined matrix is less than or equal to 1.

By limiting the quantity of non-zero elements in each row and the difference in the quantity of non-zero elements in different rows, transmit powers of different antenna ports during uplink transmission may be effectively limited, thereby balancing a transmit power of each antenna port.

In the method provided by the embodiment of the present application, by limiting the quantity of antenna ports corresponding to the matrix W, and the quantity of non-zero elements and/or the difference in the quantity of non-zero elements in different rows in the combined matrix obtained by combining the matrix W and the matrix Z, a combined matrix of any combination of the matrix W and the matrix Z is selected. While ensuring that the first-type matrix may support uplink parallel transmission of more antenna ports and more layers, a size of the candidate precoding matrices is effectively controlled.

Based on any of the above embodiments, the second-type matrix is $\frac{1}{\sqrt{2}}\begin{bmatrix} A \\ B \end{bmatrix}$, where both the matrix A and the matrix B are matrices in partial-coherent codewords for uplink P/2 antenna ports, or both the matrix A and the matrix B are matrices in non-coherent codewords for uplink P/2 antenna ports.

In an embodiment, in the construction of the second-type matrix, it is necessary to refer to the partial-coherent codewords or the non-coherent codewords for the uplink P/2 antenna ports. Specific codewords used for constructing the second-type matrix still needs to be determined based on a quantity of uplink antenna ports included in each coherent transmission group owned by the terminal. In an embodiment, in case that the coherent transmission group contains P/2 antenna ports, both the matrix A and the matrix B are matrices in the partial-coherent codewords. In case that the quantity of antenna ports in the coherent transmission group is less than P/2, both the matrix A and the matrix B are matrices in the non-coherent codewords.

In the method provided by the embodiment of the present application, partial-coherent codewords or non-coherent codewords are applied to construct the second-type matrix. Since both the partial-coherent codewords and the non-coherent codewords may be directly obtained from a traditional codebook, the candidate precoding matrices may be quickly and conveniently obtained from combinations of the codewords, thereby supporting uplink parallel transmission of more antenna ports and more layers to satisfy the high throughput requirement.

Based on any of the above embodiments, the candidate precoding matrix further includes a third-type matrix, and the third-type matrix is a matrix with only one non-zero element in each row and each column.

In an embodiment, considering that no antenna port that may perform coherent transmission may exist among the P uplink antenna ports in the terminal, that is, there may be a case that the terminal needs to perform non-coherent transmission, the candidate precoding matrices should also be provided with a precoding matrix for performing uplink non-coherent transmission of more antenna ports and more layers. In the embodiments of the present application, this type of precoding matrix used for non-coherent transmission is recorded as the third-type matrix.

Each row of the third-type matrix has only one non-zero element, and each column of the third-type matrix has only one non-zero element. The third-type matrix included in the precoding matrix may be a set of all possible matrices, or a set of matrices obtained by selecting based on a preset principle. The embodiments of the present application do not make specific limitations on this.

In the method provided by the embodiment of the present application, the third-type matrix for performing non-coherent transmission is provided as candidate precoding matrices, thereby ensuring that whether partial-coherent transmission or non-coherent transmission is performed, the terminal may obtain a suitable precoding matrix from the candidate precoding matrices to realize perform parallel transmission of more antenna ports and more layers.

Considering that the quantity of matrices that satisfy the third-type matrix and have only one non-zero element in each row and each column is extremely large, in order to select candidate precoding matrices that are more suitable for uplink non-coherent transmission, based on any of the above embodiments, the embodiment of the present application screens any candidate matrix that has only one non-zero element in each row and each column.

The third-type matrix is obtained by selecting any candidate matrix with only one non-zero element in each row and each column based on any one or more of the following rules:

serial numbers of rows in which non-zero elements of the candidate matrix are located are continuous;

an interval between serial numbers of rows in which non-zero elements in adjacent columns of the candidate matrix are located is P/2;

an interval between serial numbers of rows in which non-zero elements in adjacent columns of the candidate matrix are located is P/2-1; or

an interval between serial numbers of rows in which non-zero elements in adjacent columns of the candidate matrix are located is P/2-2,

where P is a total quantity of uplink antenna ports.

In an embodiment, one of the above four rules may be applied to implement the selecting of the third-type matrix, or multiple of the above four rules may be selected and applied separately, and the candidate matrices selected based on each rule are all taken as the third-type matrix. The embodiments of the present application do not make specific limitations on this.

In the above rules, candidate matrices having continuous serial numbers of rows in which non-zero elements are located are selected as the third-type matrix, so that the serial numbers of occupied uplink antenna ports are continuous when the matrix is applied for precoding processing and transmitting a signal, which is more conducive to the convenience of configuring the corresponding uplink antenna ports. The third-type matrix is selected from the candidate matrix based on intervals between serial numbers of rows in which non-zero elements in adjacent columns are located, so that an anti-interference performance between adjacent uplink antenna ports is stronger when the matrix is applied for precoding processing and transmitting signals.

In the method provided by the embodiment of the present application, by limiting a continuity of the serial numbers of rows in which the non-zero elements in the third-type matrix are located and the intervals between serial numbers of rows in which non-zero elements in adjacent columns ae located, the candidate matrices are selected. While ensuring that the third-type matrix may support uplink parallel transmission of more antenna ports and more layers, a size of the candidate precoding matrices is effectively controlled.

Based on any of the above embodiments, considering that the quantity of candidate precoding matrices generated based on the above method is relatively large, signaling overhead of transmitting the candidate precoding matrices between two devices will increase, and an algorithm complexity of selecting a codebook and overhead of storing all candidate precoding matrix sets will also increase, in order to solve the problem of a large quantity of candidate precoding matrices, the size of the candidate precoding matrices may also be planned and restricted through the following steps:

determining a quantity M of target candidate matrices, and obtaining multiple initial matrix combinations consisting of each M initial precoding matrices in an initial precoding matrix set;

determining an intra-group matrix difference value of each initial matrix combination based on a chordal distance between every two initial precoding matrices in each initial matrix combination; and

selecting, based on intra-group matrix difference values of multiple initial matrix combinations, a candidate matrix combination from the multiple initial matrix combinations, and determining M initial precoding matrices in the candidate matrix combination as the candidate precoding matrices.

In an embodiment, the target candidate matrix quantity M is the total quantity of candidate precoding matrices that are expected to be ultimately applied to the method for uplink transmission. The initial precoding matrix set includes a large quantity of initial precoding matrices. The initial precoding matrix set may include the first-type matrix and/or the second-type matrix, and may further include the third-type matrix and the first-type matrix and/or the second-type matrix. The embodiments of the present application do not specifically limit this.

For an initial precoding matrix set having a large scale, M may be used as a quantity of initial precoding matrices included in an initial matrix combination, and M initial precoding matrices are selected from the initial precoding matrix set to construct the initial matrix combination. It may be understood that the M initial precoding matrices here may be selected arbitrarily, so that the obtained initial matrix combination covers all possible combinations of the M initial precoding matrices.

After obtaining various initial matrix combinations, for each initial matrix combination, a difference value between each two initial precoding matrices in the initial matrix combination may be calculated, where a difference value between two initial precoding matrices may be expressed as a chordal distance between the two initial precoding matrices. After obtaining the chordal distance between each two initial precoding matrices in the initial matrix combination, an intra-group matrix difference value of the initial matrix combination may be determined based on the chordal distance, where the intra-group matrix difference value reflects a difference between each initial precoding matrix in the entire initial matrix combination in a unit of an initial matrix combination, and the intra-group matrix difference value may be an average of difference values between each two initial precoding matrices in the initial matrix combination, or a minimum of difference values between each two initial precoding matrices in the initial matrix combination. The embodiments of the present application do not specifically limit this.

After obtaining the intra-group matrix difference value of each initial matrix combination, the initial matrix combination with a largest intra-group matrix difference value may be selected from each of the above initial matrix combinations as a candidate matrix combination. It may be understood that the larger the intra-group matrix difference value, the greater the difference between initial precoding matrices in the initial matrix combination, and the more types and characteristics of the initial precoding matrices covered by the initial matrix combination. Therefore, an initial matrix combination with a largest matrix difference value is selected, that is, under the premise of a limited quantity M of initial precoding matrices, initial precoding matrices with the most types and characteristics are covered as much as possible to satisfy with various uplink transmission requirements.

After the candidate matrix combination is obtained, the M initial precoding matrices in the candidate matrix combination may be determined as the candidate precoding matrices.

In the method provided by the embodiment of the present application, the size and quantity of candidate precoding matrices are effectively limited, the algorithm complexity of precoding matrix selection is reduced, and the storage overhead of candidate precoding matrices is reduced.

Embodiment 1:

The present application provides a method for uplink transmission based on an uplink non-coherent transmission codebook, which is applied to a terminal with 8 uplink antenna ports, and includes the following steps.

1. The terminal obtains, based on the following way, a set of non-coherent transmission precoding matrices for each layer, that is, a set of third-type matrices for each layer. Sets of third-type matrices for all layers may be used as an uplink non-coherent transmission codebook and stored in the terminal.
A rule for obtaining the third-type matrix includes:

the third-type matrix has only one non-zero element in each column and only one non-zero element in each row; and

in case that Rank=1, all possible candidate matrices with only one non-zero element in each row and each column are used as the third-type matrix to form a codebook for one layer, that is, there are 8 third-type matrices for one layer, which can be referred to an uplink non-coherent transmission codebook shown in Table 1;

in case that Rank=2, among all possible candidate matrices, deletion is performed based on a rule that an interval between serial numbers of rows in which non-zero elements in adjacent columns are located is 4, and 4 third-type matrices are obtained, which may be referred to an uplink non-coherent transmission codebook shown in Table 1;

in case that Rank=3, among all possible candidate matrices, deletion is performed based on a rule that an interval between serial numbers of rows in which non-zero elements in adjacent columns are located is 3, and 2 third-type matrices are obtained, which may be referred to an uplink non-coherent transmission codebook shown in Table 1;

in case that Rank=4, among all possible candidate matrices, deletion is performed based on a rule that an interval between serial numbers of rows in which non-zero elements in adjacent columns are located is 2, and 2 third-type matrices are obtained, which may be referred to an uplink non-coherent transmission codebook shown in Table 1;

in case that Rank=5-7, among all possible candidate matrices, deletion is performed based on a rule that serial numbers of rows in which non-zero elements are located are continuous, and 1 third-type matrix is obtained in each layer, which may be referred to an uplink non-coherent transmission codebook shown in Table 1; or

in case that Rank=8, there is only one precoding matrix, which may be referred to an uplink non-coherent transmission codebook shown in Table 1.

2. The terminal receives precoding matrix indication information indicated by a network device, where the precoding matrix indication information may specifically be a precoding matrix index.

3. For a terminal that has no antenna port for coherent transmission, a corresponding precoding matrix in the above non-coherent transmission codebook is found based on the precoding matrix index indicated by the precoding matrix indication information, for performing precoding on data.

Embodiment 2:

The present application provides a method for uplink transmission based on an uplink non-coherent transmission codebook, which is applied to a terminal with 8 uplink antenna ports, and includes the following steps.
1. The network device obtains, based on the following way, a set of non-coherent transmission precoding matrices for each layer, that is, a set of third-type matrices for each layer. Sets of third-type matrices for all layers may be used as an uplink non-coherent transmission codebook and stored in the network device.
A rule of obtaining the third-type matrix is the same as that in embodiment one, and will not be described in detail here.
2. If a capability reported by the terminal only supports non-coherent transmission, the network device selects a precoding matrix from the non-coherent transmission codebook and generates precoding matrix indication information carrying an index of the precoding matrix.
3. The network device transmits the precoding matrix indication information to the terminal.

Table 1 Uplink non-coherent transmission codebook

| Quantity of layers | Non-coherent precoding matrix (third-type matrix) | | | | | | | |
|---|---|---|---|---|---|---|---|---|
| 1 layer | $\frac{1}{\sqrt{8}}\begin{bmatrix}1\\0\\0\\0\\0\\0\\0\\0\end{bmatrix}$ | $\frac{1}{\sqrt{8}}\begin{bmatrix}0\\1\\0\\0\\0\\0\\0\\0\end{bmatrix}$ | $\frac{1}{\sqrt{8}}\begin{bmatrix}0\\0\\1\\0\\0\\0\\0\\0\end{bmatrix}$ | $\frac{1}{\sqrt{8}}\begin{bmatrix}0\\0\\0\\1\\0\\0\\0\\0\end{bmatrix}$ | $\frac{1}{\sqrt{8}}\begin{bmatrix}0\\0\\0\\0\\1\\0\\0\\0\end{bmatrix}$ | $\frac{1}{\sqrt{8}}\begin{bmatrix}0\\0\\0\\0\\0\\1\\0\\0\end{bmatrix}$ | $\frac{1}{\sqrt{8}}\begin{bmatrix}0\\0\\0\\0\\0\\0\\1\\0\end{bmatrix}$ | $\frac{1}{\sqrt{8}}\begin{bmatrix}0\\0\\0\\0\\0\\0\\0\\1\end{bmatrix}$ |
| 2 layers | $\frac{1}{\sqrt{8}}\begin{bmatrix}1&0\\0&0\\0&0\\0&0\\0&1\\0&0\\0&0\\0&0\end{bmatrix}$ | $\frac{1}{\sqrt{8}}\begin{bmatrix}0&0\\1&0\\0&0\\0&0\\0&0\\0&1\\0&0\\0&0\end{bmatrix}$ | $\frac{1}{\sqrt{8}}\begin{bmatrix}0&0\\0&0\\1&0\\0&0\\0&0\\0&0\\0&1\\0&0\end{bmatrix}$ | $\frac{1}{\sqrt{8}}\begin{bmatrix}0&0\\0&0\\0&0\\1&0\\0&0\\0&0\\0&0\\0&1\end{bmatrix}$ | | | | |
| 3 layers | $\frac{1}{\sqrt{8}}\begin{bmatrix}1&0&0\\0&0&0\\0&0&0\\0&1&0\\0&0&0\\0&0&0\\0&0&1\\0&0&0\end{bmatrix}$ | $\frac{1}{\sqrt{8}}\begin{bmatrix}0&0&0\\1&0&0\\0&0&0\\0&0&0\\0&1&0\\0&0&0\\0&0&0\\0&0&1\end{bmatrix}$ | | | | | | |
| 4 layers | $\frac{1}{\sqrt{8}}\begin{bmatrix}1&0&0&0\\0&0&0&0\\0&1&0&0\\0&0&0&0\\0&0&1&0\\0&0&0&0\\0&0&0&1\\0&0&0&0\end{bmatrix}$ | $\frac{1}{\sqrt{8}}\begin{bmatrix}0&0&0&0\\1&0&0&0\\0&0&0&0\\0&1&0&0\\0&0&0&0\\0&0&1&0\\0&0&0&0\\0&0&0&1\end{bmatrix}$ | | | | | | |

(continued)

| Quantity of layers | Non-coherent precoding matrix (third-type matrix) | | | | | | | |
|---|---|---|---|---|---|---|---|---|
| 5 layers | $\frac{1}{\sqrt{8}}\begin{bmatrix}1&0&0&0&0\\0&1&0&0&0\\0&0&1&0&0\\0&0&0&1&0\\0&0&0&0&1\\0&0&0&0&0\\0&0&0&0&0\\0&0&0&0&0\end{bmatrix}$ | | | | | | | |
| 6 layers | $\frac{1}{\sqrt{8}}\begin{bmatrix}1&0&0&0&0&0\\0&1&0&0&0&0\\0&0&1&0&0&0\\0&0&0&1&0&0\\0&0&0&0&1&0\\0&0&0&0&0&1\\0&0&0&0&0&0\\0&0&0&0&0&0\end{bmatrix}$ | | | | | | | |
| 7 layers | $\frac{1}{\sqrt{8}}\begin{bmatrix}1&0&0&0&0&0&0\\0&1&0&0&0&0&0\\0&0&1&0&0&0&0\\0&0&0&1&0&0&0\\0&0&0&0&1&0&0\\0&0&0&0&0&1&0\\0&0&0&0&0&0&1\\0&0&0&0&0&0&0\end{bmatrix}$ | | | | | | | |
| 8 layers | $\frac{1}{\sqrt{8}}\begin{bmatrix}1&0&0&0&0&0&0&0\\0&1&0&0&0&0&0&0\\0&0&1&0&0&0&0&0\\0&0&0&1&0&0&0&0\\0&0&0&0&1&0&0&0\\0&0&0&0&0&1&0&0\\0&0&0&0&0&0&1&0\\0&0&0&0&0&0&0&1\end{bmatrix}$ | | | | | | | |

Embodiment 3:

The present application provides a method for uplink transmission based on an uplink partial-coherent transmission codebook, which is applied to a terminal with 8 uplink antenna ports, and the method includes the following steps.

1. The terminal is configured with 2 coherent transmission groups, and each coherent transmission group contains 4 antenna ports. The terminal may generate, based on the following way, a set of partial-coherent transmission precoding matrices for each layer, that is, a set of first-type matrices for each layer. Sets of first-type matrices for all layers is stored in the terminal as an uplink partial-coherent transmission codebook shown in Table 2.

A rule of obtaining the first-type matrix includes:

the first-type matrix includes any combination of a matrix W consisting of non-zero elements and a zero element matrix Z, where for each column of the first-type matrix, only one element corresponding to a coherent transmission group is non-zero, and all elements corresponding to other coherent transmission groups are zero.

**In** the following formula, $W_{4Tx,rankn}$ is full-coherent codewords for traditional uplink 4 antenna ports (UL 4Tx) system rank n, and has a dimension of 4*n.

In case that Rank=1, and $W_{4Tx,rank1} = \begin{bmatrix} x_1 \\ x_2 \\ x_3 \\ x_4 \end{bmatrix}$, a first-type matrix for UL 4Tx one layer may include $\begin{bmatrix} x_1 \\ x_2 \\ 0 \\ 0 \\ x_3 \\ x_4 \\ 0 \\ 0 \end{bmatrix}$ and/or $\begin{bmatrix} 0 \\ 0 \\ x_1 \\ x_2 \\ 0 \\ 0 \\ x_3 \\ x_4 \end{bmatrix}$.

In case that Rank=2, and $W_{4Tx,rank1} = \begin{bmatrix} x_1 \\ x_2 \\ x_3 \\ x_4 \end{bmatrix}$, a first-type matrix for UL 4Tx two layers may be $\begin{bmatrix} x_1 & 0 \\ x_2 & 0 \\ 0 & x_1 \\ 0 & x_2 \\ x_3 & 0 \\ x_4 & 0 \\ 0 & x_3 \\ 0 & x_4 \end{bmatrix}$.

In case that Rank=3, $W_{4Tx,rank2} = \begin{bmatrix} x_{11,r2} & x_{21,r2} \\ x_{12,r2} & x_{22,r2} \\ x_{13,r2} & x_{23,r2} \\ x_{14,r2} & x_{24,r2} \end{bmatrix}$, and $W_{4Tx,rank1} = \begin{bmatrix} x_1 \\ x_2 \\ x_3 \\ x_4 \end{bmatrix}$, a first- type matrix for UL 4Tx three layers may include $\begin{bmatrix} x_{11,r2} & x_{21,r2} & 0 \\ x_{12,r2} & x_{22,r2} & 0 \\ 0 & 0 & x_1 \\ 0 & 0 & x_2 \\ x_{13,r2} & x_{23,r2} & 0 \\ x_{14,r2} & x_{24,r2} & 0 \\ 0 & 0 & x_3 \\ 0 & 0 & x_4 \end{bmatrix}$ and/or $\begin{bmatrix} x_1 & 0 & 0 \\ x_2 & 0 & 0 \\ 0 & x_{11,r2} & x_{21,r2} \\ 0 & x_{12,r2} & x_{22,r2} \\ x_3 & 0 & 0 \\ x_4 & 0 & 0 \\ 0 & x_{13,r2} & x_{23,r2} \\ 0 & x_{14,r2} & x_{24,r2} \end{bmatrix}$.

In case that Rank=4, and $W_{4Tx,rank2} = \begin{bmatrix} x_{11,r2} & x_{21,r2} \\ x_{12,r2} & x_{22,r2} \\ x_{13,r2} & x_{23,r2} \\ x_{14,r2} & x_{24,r2} \end{bmatrix}$, a first-type matrix for UL 4Tx four layers may be $\begin{bmatrix} x_{11,r2} & x_{21,r2} & 0 & 0 \\ x_{12,r2} & x_{22,r2} & 0 & 0 \\ 0 & 0 & x_{11,r2} & x_{21,r2} \\ 0 & 0 & x_{12,r2} & x_{22,r2} \\ x_{13,r2} & x_{23,r2} & 0 & 0 \\ x_{14,r2} & x_{24,r2} & 0 & 0 \\ 0 & 0 & x_{13,r2} & x_{23,r2} \\ 0 & 0 & x_{14,r2} & x_{24,r2} \end{bmatrix}$, where non-zero matrices $W_{4Tx,rank2}$ selected by columns 1 and 3, and columns 2 and 4 may be the same or different.

In case that Rank=5, $W_{4Tx,rank2} = \begin{bmatrix} x_{11,r2} & x_{21,r2} \\ x_{12,r2} & x_{22,r2} \\ x_{13,r2} & x_{23,r2} \\ x_{14,r2} & x_{24,r2} \end{bmatrix}$, and $W_{4Tx,rank3} = \begin{bmatrix} x_{11,r3} & x_{21,r3} & x_{31,r3} \\ x_{12,r3} & x_{22,r3} & x_{32,r3} \\ x_{13,r3} & x_{23,r3} & x_{33,r3} \\ x_{14,r3} & x_{24,r3} & x_{34,r3} \end{bmatrix}$, a first-type matrix for UL 4Tx five layers may be $\begin{bmatrix} x_{11,r3} & x_{21,r3} & x_{31,r3} & 0 & 0 \\ x_{12,r3} & x_{22,r3} & x_{32,r3} & 0 & 0 \\ 0 & 0 & 0 & x_{11,r2} & x_{21,r2} \\ 0 & 0 & 0 & x_{12,r2} & x_{22,r2} \\ x_{13,r3} & x_{23,r3} & x_{33,r3} & 0 & 0 \\ x_{14,r3} & x_{24,r3} & x_{34,r3} & 0 & 0 \\ 0 & 0 & 0 & x_{13,r2} & x_{23,r2} \\ 0 & 0 & 0 & x_{14,r2} & x_{24,r2} \end{bmatrix}$ and/or $\begin{bmatrix} x_{11,r2} & x_{21,r2} & 0 & 0 & 0 \\ x_{12,r2} & x_{22,r2} & 0 & 0 & 0 \\ 0 & 0 & x_{11,r3} & x_{21,r3} & x_{31,r3} \\ 0 & 0 & x_{12,r3} & x_{22,r3} & x_{32,r3} \\ x_{13,r2} & x_{23,r2} & 0 & 0 & 0 \\ x_{14,r2} & x_{24,r2} & 0 & 0 & 0 \\ 0 & 0 & x_{13,r3} & x_{23,r3} & x_{33,r3} \\ 0 & 0 & x_{14,r3} & x_{24,r3} & x_{34,r3} \end{bmatrix}$.

In case that Rank=6, and $W_{4Tx,rank3} = \begin{bmatrix} x_{11,r3} & x_{21,r3} & x_{31,r3} \\ x_{12,r3} & x_{22,r3} & x_{32,r3} \\ x_{13,r3} & x_{23,r3} & x_{33,r3} \\ x_{14,r3} & x_{24,r3} & x_{34,r3} \end{bmatrix}$, a first-type matrix for UL 4Tx six layers may be $\begin{bmatrix} x_{11,r3} & x_{21,r3} & x_{31,r3} & 0 & 0 & 0 \\ x_{12,r3} & x_{22,r3} & x_{32,r3} & 0 & 0 & 0 \\ 0 & 0 & 0 & x_{11,r3} & x_{21,r3} & x_{31,r3} \\ 0 & 0 & 0 & x_{12,r3} & x_{22,r3} & x_{32,r3} \\ x_{13,r3} & x_{23,r3} & x_{33,r3} & 0 & 0 & 0 \\ x_{14,r3} & x_{24,r3} & x_{34,r3} & 0 & 0 & 0 \\ 0 & 0 & 0 & x_{13,r3} & x_{23,r3} & x_{33,r3} \\ 0 & 0 & 0 & x_{14,r3} & x_{24,r3} & x_{34,r3} \end{bmatrix}$, where the non-zero matrices $W_{4Tx,rank3}$ selected for columns 1 and 4, columns 2 and 5, and columns 3 and 6 may be the same or different.

In case that Rank=7, $W_{4Tx,rank3} = \begin{bmatrix} x_{11,r3} & x_{21,r3} & x_{31,r3} \\ x_{12,r3} & x_{22,r3} & x_{32,r3} \\ x_{13,r3} & x_{23,r3} & x_{33,r3} \\ x_{14,r3} & x_{24,r3} & x_{34,r3} \end{bmatrix}$ and $W_{4Tx,rank4}$ $\begin{bmatrix} x_{11,r4} & x_{21,r4} & x_{31,r4} & x_{41,r4} \\ x_{12,r4} & x_{22,r4} & x_{32,r4} & x_{42,r4} \\ x_{13,r4} & x_{23,r4} & x_{33,r4} & x_{43,r4} \\ x_{14,r4} & x_{24,r4} & x_{34,r4} & x_{44,r4} \end{bmatrix}$, a first-type matrix for UL 4Tx seven layers may be $\begin{bmatrix} x_{11,r4} & x_{21,r4} & x_{31,r4} & x_{41,r4} & 0 & 0 & 0 \\ x_{12,r4} & x_{22,r4} & x_{32,r4} & x_{42,r4} & 0 & 0 & 0 \\ 0 & 0 & 0 & 0 & x_{11,r3} & x_{21,r3} & x_{31,r3} \\ 0 & 0 & 0 & 0 & x_{12,r3} & x_{22,r3} & x_{32,r3} \\ x_{13,r4} & x_{23,r4} & x_{33,r4} & x_{43,r4} & 0 & 0 & 0 \\ x_{14,r4} & x_{24,r4} & x_{34,r4} & x_{44,r4} & 0 & 0 & 0 \\ 0 & 0 & 0 & 0 & x_{13,r3} & x_{23,r3} & x_{33,r3} \\ 0 & 0 & 0 & 0 & x_{14,r3} & x_{24,r3} & x_{34,r3} \end{bmatrix}$ and/or $\begin{bmatrix} x_{11,r3} & x_{21,r3} & x_{31,r3} & 0 & 0 & 0 & 0 \\ x_{12,r3} & x_{22,r3} & x_{32,r3} & 0 & 0 & 0 & 0 \\ 0 & 0 & 0 & x_{11,r4} & x_{21,r4} & x_{31,r4} & x_{41,r4} \\ 0 & 0 & 0 & x_{12,r4} & x_{22,r4} & x_{32,r4} & x_{42,r4} \\ x_{13,r3} & x_{23,r3} & x_{33,r3} & 0 & 0 & 0 & 0 \\ x_{14,r3} & x_{24,r3} & x_{34,r3} & 0 & 0 & 0 & 0 \\ 0 & 0 & 0 & x_{13,r4} & x_{23,r4} & x_{33,r4} & x_{43,r4} \\ 0 & 0 & 0 & x_{14,r4} & x_{24,r4} & x_{34,r4} & x_{44,r4} \end{bmatrix}$.

In case **that** Rank=8, and $W_{4Tx,rank4} = \begin{bmatrix} x_{11,r4} & x_{21,r4} & x_{31,r4} & x_{41,r4} \\ x_{12,r4} & x_{22,r4} & x_{32,r4} & x_{42,r4} \\ x_{13,r4} & x_{23,r4} & x_{33,r4} & x_{43,r4} \\ x_{14,r4} & x_{24,r4} & x_{34,r4} & x_{44,r4} \end{bmatrix}$, a first-type matrix for UL 4Tx eight layers may be $$\begin{bmatrix} x_{11,r4} & x_{21,r4} & x_{31,r4} & x_{41,r4} & 0 & 0 & 0 & 0 \\ x_{12,r4} & x_{22,r4} & x_{32,r4} & x_{42,r4} & 0 & 0 & 0 & 0 \\ 0 & 0 & 0 & 0 & x_{11,r4} & x_{21,r4} & x_{31,r4} & x_{41,r4} \\ 0 & 0 & 0 & 0 & x_{12,r4} & x_{22,r4} & x_{32,r4} & x_{42,r4} \\ x_{13,r4} & x_{23,r4} & x_{33,r4} & x_{43,r4} & 0 & 0 & 0 & 0 \\ x_{14,r4} & x_{24,r4} & x_{34,r4} & x_{44,r4} & 0 & 0 & 0 & 0 \\ 0 & 0 & 0 & 0 & x_{13,r4} & x_{23,r4} & x_{33,r4} & x_{43,r4} \\ 0 & 0 & 0 & 0 & x_{14,r4} & x_{24,r4} & x_{34,r4} & x_{44,r4} \end{bmatrix}$$ , and non-zero matrices $W_{4Tx,rank4}$ selected for columns 1 and 5, columns 2 and 6, columns 3 and 7, and columns 4 and 8 may be the same or different.

2. The terminal receives precoding matrix indication information indicated by a network device, where the precoding matrix indication information may specifically be a precoding matrix index.

3. The terminal finds a corresponding precoding matrix from the partial-coherent transmission codebook including the first-type matrix and the non-coherent codebook including the third-type matrix based on the precoding matrix index in the precoding matrix indication information, for performing precoding on data.

Embodiment 4:

The present application provides a method for uplink transmission based on an uplink partial-coherent transmission codebook, which is applied to a terminal with 8 uplink antenna ports, and the method includes the following steps.

1. A network device generates, based on the following way, a set of partial-coherent transmission precoding matrices for each layer, that is, a set of first-type matrices for each layer. Sets of first-type matrices for all layers is stored in the network device as an uplink partial-coherent transmission codebook shown in Table 2.

An obtaining rule of the first-type matrix is the same as that in embodiment three, and will not be described in detail here.

2. If a capability reported by the terminal supports partial-coherent transmission, and each coherent transmission group contains 4 ports, the network device selects a precoding matrix from the above-mentioned partial-coherent transmission codebook and the above-mentioned non-coherent transmission codebook, and generates precoding matrix indication information carrying an index of the precoding matrix.

3. The network device transmits the precoding matrix indication information to the terminal.

Table 2 Uplink partial-coherent transmission codebook (first-type matrix)

| | Partial-coherent one-layer precoding matrix | | | | | | | |
|---|---|---|---|---|---|---|---|---|
| Alt1 (Example 1) | $\frac{1}{2}\begin{bmatrix}1\\1\\0\\0\\j\\j\\0\\0\end{bmatrix}$ | $\frac{1}{2}\begin{bmatrix}1\\1\\0\\0\\-j\\-j\\0\\0\end{bmatrix}$ | $\frac{1}{2}\begin{bmatrix}1\\j\\0\\0\\1\\j\\0\\0\end{bmatrix}$ | $\frac{1}{2}\begin{bmatrix}1\\j\\0\\0\\-1\\-j\\0\\0\end{bmatrix}$ | $\frac{1}{2}\begin{bmatrix}1\\-1\\0\\0\\j\\-j\\0\\0\end{bmatrix}$ | $\frac{1}{2}\begin{bmatrix}1\\-1\\0\\0\\-j\\j\\0\\0\end{bmatrix}$ | $\frac{1}{2}\begin{bmatrix}1\\-j\\0\\0\\1\\-j\\0\\0\end{bmatrix}$ | $\frac{1}{2}\begin{bmatrix}1\\-j\\0\\0\\-1\\j\\0\\0\end{bmatrix}$ |
| | $\frac{1}{2}\begin{bmatrix}0\\0\\1\\1\\0\\0\\j\\j\end{bmatrix}$ | $\frac{1}{2}\begin{bmatrix}0\\0\\1\\1\\0\\0\\-j\\-j\end{bmatrix}$ | $\frac{1}{2}\begin{bmatrix}0\\0\\1\\j\\0\\0\\1\\j\end{bmatrix}$ | $\frac{1}{2}\begin{bmatrix}0\\0\\1\\j\\0\\0\\-1\\-j\end{bmatrix}$ | $\frac{1}{2}\begin{bmatrix}0\\0\\1\\-1\\0\\0\\j\\-j\end{bmatrix}$ | $\frac{1}{2}\begin{bmatrix}0\\0\\1\\-1\\0\\0\\-j\\j\end{bmatrix}$ | $\frac{1}{2}\begin{bmatrix}0\\0\\1\\-j\\0\\0\\1\\-j\end{bmatrix}$ | $\frac{1}{2}\begin{bmatrix}0\\0\\1\\-j\\0\\0\\-1\\j\end{bmatrix}$ |

(continued)

| | | | | | | | | |
|---|---|---|---|---|---|---|---|---|
| | Partial-coherent one-layer precoding matrix | | | | | | | |
| Alt2 (Example 2) | $\frac{1}{2}\begin{bmatrix}1\\1\\0\\0\\1\\1\\0\\0\end{bmatrix}$ | $\frac{1}{2}\begin{bmatrix}1\\1\\0\\0\\-1\\-1\\0\\0\end{bmatrix}$ | $\frac{1}{2}\begin{bmatrix}1\\j\\0\\0\\j\\-1\\0\\0\end{bmatrix}$ | $\frac{1}{2}\begin{bmatrix}1\\j\\0\\0\\-j\\1\\0\\0\end{bmatrix}$ | $\frac{1}{2}\begin{bmatrix}1\\-1\\0\\0\\1\\-1\\0\\0\end{bmatrix}$ | $\frac{1}{2}\begin{bmatrix}1\\-1\\0\\0\\-1\\1\\0\\0\end{bmatrix}$ | $\frac{1}{2}\begin{bmatrix}1\\-j\\0\\0\\j\\1\\0\\0\end{bmatrix}$ | $\frac{1}{2}\begin{bmatrix}1\\-j\\0\\0\\-j\\-1\\0\\0\end{bmatrix}$ |
| | $\frac{1}{2}\begin{bmatrix}0\\0\\1\\1\\0\\0\\1\\1\end{bmatrix}$ | $\frac{1}{2}\begin{bmatrix}0\\0\\1\\1\\0\\0\\-1\\-1\end{bmatrix}$ | $\frac{1}{2}\begin{bmatrix}0\\0\\1\\j\\0\\0\\j\\-1\end{bmatrix}$ | $\frac{1}{2}\begin{bmatrix}0\\0\\1\\j\\0\\0\\-j\\1\end{bmatrix}$ | $\frac{1}{2}\begin{bmatrix}0\\0\\1\\-1\\0\\0\\1\\-1\end{bmatrix}$ | $\frac{1}{2}\begin{bmatrix}0\\0\\1\\-1\\0\\0\\-1\\1\end{bmatrix}$ | $\frac{1}{2}\begin{bmatrix}0\\0\\1\\-j\\0\\0\\j\\1\end{bmatrix}$ | $\frac{1}{2}\begin{bmatrix}0\\0\\1\\-j\\0\\0\\-j\\-1\end{bmatrix}$ |
| | Partial-coherent two-layer precoding matrix | | | | | | | |
| Alt1 ( Example 1) | $\frac{1}{\sqrt{8}}\begin{bmatrix}1&0\\1&0\\0&1\\0&-j\\j&0\\j&0\\0&-1\\0&j\end{bmatrix}$ | $\frac{1}{\sqrt{8}}\begin{bmatrix}1&0\\1&0\\0&1\\0&-1\\-j&0\\-j&0\\0&-j\\0&j\end{bmatrix}$ | $\frac{1}{\sqrt{8}}\begin{bmatrix}1&0\\j&0\\0&1\\0&-j\\1&0\\j&0\\0&1\\0&-j\end{bmatrix}$ | $\frac{1}{\sqrt{8}}\begin{bmatrix}1&0\\j&0\\0&1\\0&-1\\-1&0\\-j&0\\0&j\\0&-j\end{bmatrix}$ | $\frac{1}{\sqrt{8}}\begin{bmatrix}1&0\\-1&0\\0&1\\0&1\\j&0\\-j&0\\0&-j\\0&-j\end{bmatrix}$ | $\frac{1}{\sqrt{8}}\begin{bmatrix}1&0\\-1&0\\0&1\\0&j\\-j&0\\j&0\\0&-1\\0&-j\end{bmatrix}$ | $\frac{1}{\sqrt{8}}\begin{bmatrix}1&0\\-j&0\\0&1\\0&j\\1&0\\-j&0\\0&1\\0&j\end{bmatrix}$ | $\frac{1}{\sqrt{8}}\begin{bmatrix}1&0\\-j&0\\0&1\\0&1\\-1&0\\j&0\\0&j\\0&j\end{bmatrix}$ |

(continued)

| | Partial-coherent two-layer precoding matrix | | | | | | | |
|---|---|---|---|---|---|---|---|---|
| Alt2 ( Example 2) | $\frac{1}{\sqrt{8}}\begin{bmatrix}1 & 0\\ 1 & 0\\ 0 & 1\\ 0 & -j\\ 1 & 0\\ 1 & 0\\ 0 & -j\\ 0 & -1\end{bmatrix}$ | $\frac{1}{\sqrt{8}}\begin{bmatrix}1 & 0\\ 1 & 0\\ 0 & 1\\ 0 & -1\\ -1 & 0\\ -1 & 0\\ 0 & -1\\ 0 & 1\end{bmatrix}$ | $\frac{1}{\sqrt{8}}\begin{bmatrix}1 & 0\\ j & 0\\ 0 & 1\\ 0 & -j\\ j & 0\\ -1 & 0\\ 0 & j\\ 0 & 1\end{bmatrix}$ | $\frac{1}{\sqrt{8}}\begin{bmatrix}1 & 0\\ j & 0\\ 0 & 1\\ 0 & -1\\ -j & 0\\ 1 & 0\\ 0 & 1\\ 0 & -1\end{bmatrix}$ | $\frac{1}{\sqrt{8}}\begin{bmatrix}1 & 0\\ -1 & 0\\ 0 & 1\\ 0 & 1\\ 1 & 0\\ -1 & 0\\ 0 & -1\\ 0 & -1\end{bmatrix}$ | $\frac{1}{\sqrt{8}}\begin{bmatrix}1 & 0\\ -1 & 0\\ 0 & 1\\ 0 & j\\ -1 & 0\\ 1 & 0\\ 0 & -j\\ 0 & 1\end{bmatrix}$ | $\frac{1}{\sqrt{8}}\begin{bmatrix}1 & 0\\ -j & 0\\ 0 & 1\\ 0 & j\\ j & 0\\ 1 & 0\\ 0 & j\\ 0 & -1\end{bmatrix}$ | $\frac{1}{\sqrt{8}}\begin{bmatrix}1 & 0\\ -j & 0\\ 0 & 1\\ 0 & 1\\ -j & 0\\ -1 & 0\\ 0 & 1\\ 0 & 1\end{bmatrix}$ |

| Partial-coherent three-layer precoding matrix | |
|---|---|
| $\frac{1}{2\sqrt{3}}\begin{bmatrix}1 & 1 & 0\\1 & 1 & 0\\0 & 0 & 1\\0 & 0 & 1\\1 & -1 & 0\\1 & -1 & 0\\0 & 0 & 1\\0 & 0 & 1\end{bmatrix}$ | $\frac{1}{2\sqrt{3}}\begin{bmatrix}1 & 1 & 0\\-1 & -1 & 0\\0 & 0 & 1\\0 & 0 & -1\\1 & -1 & 0\\-1 & 1 & 0\\0 & 0 & 1\\0 & 0 & -1\end{bmatrix}$ |

| Partial-coherent four-layer precoding matrix | |
|---|---|
| $\frac{1}{4}\begin{bmatrix}1 & 1 & 0 & 0\\1 & 1 & 0 & 0\\0 & 0 & 1 & 1\\0 & 0 & 1 & 1\\1 & -1 & 0 & 0\\1 & -1 & 0 & 0\\0 & 0 & j & -j\\0 & 0 & j & -j\end{bmatrix}$ | $\frac{1}{4}\begin{bmatrix}1 & 1 & 0 & 0\\-1 & -1 & 0 & 0\\0 & 0 & 1 & 1\\0 & 0 & -1 & -1\\j & -j & 0 & 0\\-j & j & 0 & 0\\0 & 0 & 1 & -1\\0 & 0 & -1 & 1\end{bmatrix}$ |

| Partial-coherent five-layer precoding matrix |
|---|
| $\frac{1}{2\sqrt{5}}\begin{bmatrix}1 & 1 & 1 & 0 & 0\\1 & -1 & 1 & 0 & 0\\0 & 0 & 0 & 1 & 1\\0 & 0 & 0 & 1 & 1\\1 & 1 & -1 & 0 & 0\\1 & -1 & -1 & 0 & 0\\0 & 0 & 0 & 1 & -1\\0 & 0 & 0 & 1 & -1\end{bmatrix}$ |

| Partial-coherent six-layer precoding matrix |
|---|
| $\frac{1}{2\sqrt{6}}\begin{bmatrix}1 & 1 & 1 & 0 & 0 & 0\\1 & -1 & 1 & 0 & 0 & 0\\0 & 0 & 0 & 1 & 1 & 1\\0 & 0 & 0 & 1 & -1 & 1\\1 & 1 & -1 & 0 & 0 & 0\\1 & -1 & -1 & 0 & 0 & 0\\0 & 0 & 0 & 1 & 1 & -1\\0 & 0 & 0 & 1 & -1 & -1\end{bmatrix}$ |

| Partial-coherent seven-layer precoding matrix |
|---|
| $\frac{1}{2\sqrt{7}}\begin{bmatrix}1 & 1 & 1 & 1 & 0 & 0 & 0\\ 1 & -1 & 1 & -1 & 0 & 0 & 0\\ 0 & 0 & 0 & 0 & 1 & 1 & 1\\ 0 & 0 & 0 & 0 & 1 & -1 & 1\\ 1 & 1 & -1 & -1 & 0 & 0 & 0\\ 1 & -1 & -1 & 1 & 0 & 0 & 0\\ 0 & 0 & 0 & 0 & 1 & 1 & -1\\ 0 & 0 & 0 & 0 & 1 & -1 & -1\end{bmatrix}$ |

| Partial-coherent eight layers precoding matrix |
|---|
| $\frac{1}{4\sqrt{2}}\begin{bmatrix}1 & 1 & 1 & 1 & 0 & 0 & 0 & 0\\ 1 & -1 & 1 & -1 & 0 & 0 & 0 & 0\\ 0 & 0 & 0 & 0 & 1 & 1 & 1 & 1\\ 0 & 0 & 0 & 0 & 1 & -1 & 1 & -1\\ 1 & 1 & -1 & -1 & 0 & 0 & 0 & 0\\ 1 & -1 & -1 & 1 & 0 & 0 & 0 & 0\\ 0 & 0 & 0 & 0 & 1 & 1 & -1 & -1\\ 0 & 0 & 0 & 0 & 1 & -1 & -1 & 1\end{bmatrix}$ |

Embodiment 5:

The present application provides a method for uplink transmission based on an uplink partial-coherent transmission codebook, which is applied to a terminal with 8 uplink antenna ports, and the method includes the following steps.

1. The terminal is configured with 4 coherent transmission groups, and each coherent transmission group contains 2 antenna ports. The terminal may generate, based on the following way, a set of partial-coherent transmission precoding matrices for each layer, that is, a set of first-type matrices for each layer. Sets of first-type matrices for all layers is stored in the terminal as an uplink partial-coherent transmission codebook.

A rule of obtaining the first-type matrix includes:
the first-type matrix includes any combination of a matrix W consisting of non-zero elements and a zero element matrix Z, where for each column of the first-type matrix, only one element corresponding to a coherent transmission group is non-zero, and elements corresponding to other coherent transmission groups are all zero.

In the following formula, $W_{2Tx,rankn}$ may be a full-coherent precoding matrix for traditional uplink 2 antenna ports UL 2Tx system rank n, and has a dimension of 2*n.

In case that Rank=1, and $W_{2Tx,rank1} = \begin{bmatrix}x_1\\ x_2\end{bmatrix}$, a first-type matrix for UL 8Tx layer may be $\begin{bmatrix}x_1\\ 0\\ 0\\ 0\\ x_2\\ 0\\ 0\\ 0\end{bmatrix}$ and/or $\begin{bmatrix}0\\ x_1\\ 0\\ 0\\ 0\\ x_2\\ 0\\ 0\end{bmatrix}$

and/or $\begin{bmatrix}0\\0\\x_1\\0\\0\\0\\x_2\\0\end{bmatrix}$ and/or $\begin{bmatrix}0\\0\\0\\x_1\\0\\0\\0\\x_2\end{bmatrix}$.

In case that Rank=2, and $W_{2Tx,rank1}=\begin{bmatrix}x_1\\x_2\end{bmatrix}$, a first-type matrix for UL 8Tx two layers may be $\begin{bmatrix}x_1&0\\0&x_1\\0&0\\0&0\\x_2&0\\0&x_2\\0&0\\0&0\end{bmatrix}$ and/or $\begin{bmatrix}x_1&0\\0&0\\0&x_1\\0&0\\x_2&0\\0&0\\0&x_2\\0&0\end{bmatrix}$ and/or $\begin{bmatrix}x_1&0\\0&0\\0&0\\0&x_1\\x_2&0\\0&0\\0&0\\0&x_2\end{bmatrix}$ and/or . $\begin{bmatrix}0&0\\x_1&0\\0&x_1\\0&0\\0&0\\x_2&0\\0&x_2\\0&0\end{bmatrix}$ and/or $\begin{bmatrix}0&0\\x_1&0\\0&0\\0&x_1\\0&0\\x_2&0\\0&0\\0&x_2\end{bmatrix}$ and/or $\begin{bmatrix}0&0\\0&0\\x_1&0\\0&x_1\\0&0\\0&0\\x_2&0\\0&x_2\end{bmatrix}$. The first and second columns may use the same or different $W_{2Tx,rank1}$.

In case that Rank=3, and $W_{2Tx,rank1}=\begin{bmatrix}x_1\\x_2\end{bmatrix}$, a first-type matrix for UL 8Tx three layers may be $\begin{bmatrix}x_1&0&0\\0&x_1&0\\0&0&x_1\\0&0&0\\x_2&0&0\\0&x_2&0\\0&0&x_2\\0&0&0\end{bmatrix}$ and/or $\begin{bmatrix}x_1&0&0\\0&x_1&0\\0&0&0\\0&0&x_1\\x_2&0&0\\0&x_2&0\\0&0&0\\0&0&x_2\end{bmatrix}$ and/or $\begin{bmatrix}x_1&0&0\\0&0&0\\0&x_1&0\\0&0&x_1\\x_2&0&0\\0&0&0\\0&x_2&0\\0&0&x_2\end{bmatrix}$ and/or $\begin{bmatrix}0&0&0\\x_1&0&0\\0&x_1&0\\0&0&x_1\\0&0&0\\x_2&0&0\\0&x_2&0\\0&0&x_2\end{bmatrix}$. The first/second/third columns may use the same or different $W_{2Tx,rank1}$.

In case that Rank=4, and $W_{2Tx,rank1}=\begin{bmatrix}x_1\\x_2\end{bmatrix}$, a first-type matrix for UL 8Tx four layers may be $\begin{bmatrix}x_1&0&0&0\\0&x_1&0&0\\0&0&x_1&0\\0&0&0&x_1\\x_2&0&0&0\\0&x_2&0&0\\0&0&x_2&0\\0&0&0&x_2\end{bmatrix}$. The first/second/third/fourth columns may use the same or different $W_{2Tx,rank1}$.

In case that Rank=5, $W_{2Tx,rank1} = \begin{bmatrix} x_1 \\ x_2 \end{bmatrix}$, and $W_{2Tx,rank2} = \begin{bmatrix} x_{11,r2} & x_{21,r2} \\ x_{12,r2} & x_{22,r2} \end{bmatrix}$, a first-type matrix for UL 8Tx five layers may be $\begin{bmatrix} x_{11,r2} & x_{21,r2} & 0 & 0 & 0 \\ 0 & 0 & x_1 & 0 & 0 \\ 0 & 0 & 0 & x_1 & 0 \\ 0 & 0 & 0 & 0 & x_1 \\ x_{12,r2} & x_{22,r2} & 0 & 0 & 0 \\ 0 & 0 & x_2 & 0 & 0 \\ 0 & 0 & 0 & x_2 & 0 \\ 0 & 0 & 0 & 0 & x_2 \end{bmatrix}$ and/or $\begin{bmatrix} x_1 & 0 & 0 & 0 & 0 \\ 0 & x_{11,r2} & x_{21,r2} & 0 & 0 \\ 0 & 0 & 0 & x_1 & 0 \\ 0 & 0 & 0 & 0 & x_1 \\ x_2 & 0 & 0 & 0 & 0 \\ 0 & x_{12,r2} & x_{22,r2} & 0 & 0 \\ 0 & 0 & 0 & x_2 & 0 \\ 0 & 0 & 0 & 0 & x_2 \end{bmatrix}$ and/or $\begin{bmatrix} x_1 & 0 & 0 & 0 & 0 \\ 0 & x_1 & 0 & 0 & 0 \\ 0 & 0 & x_{11,r2} & x_{21,r2} & 0 \\ 0 & 0 & 0 & 0 & x_1 \\ x_2 & 0 & 0 & 0 & 0 \\ 0 & x_2 & 0 & 0 & 0 \\ 0 & 0 & x_2 & x_2 & 0 \\ 0 & 0 & 0 & 0 & x_2 \end{bmatrix}$ and $\begin{bmatrix} x_1 & 0 & 0 & 0 & 0 \\ 0 & x_1 & 0 & 0 & 0 \\ 0 & 0 & x_1 & 0 & 0 \\ 0 & 0 & 0 & x_{11,r2} & x_{21,r2} \\ x_2 & 0 & 0 & 0 & 0 \\ 0 & x_2 & 0 & 0 & 0 \\ 0 & 0 & x_2 & 0 & 0 \\ 0 & 0 & 0 & x_{12,r2} & x_{22,r2} \end{bmatrix}$. Different columns of the rank1 matrix may use the same or different $W_{2Tx,rank1}$.

In case that Rank=6, $W_{2Tx,rank1} = \begin{bmatrix} x_1 \\ x_2 \end{bmatrix}$, and $W_{2Tx,rank2} = \begin{bmatrix} x_{11,r2} & x_{21,r2} \\ x_{12,r2} & x_{22,r2} \end{bmatrix}$, a first-type matrix for UL 8Tx six layers may be $\begin{bmatrix} x_{11,r2} & x_{21,r2} & 0 & 0 & 0 & 0 \\ 0 & 0 & x_{11,r2} & x_{21,r2} & 0 & 0 \\ 0 & 0 & 0 & 0 & x_1 & 0 \\ 0 & 0 & 0 & 0 & 0 & x_1 \\ x_{12,r2} & x_{22,r2} & 0 & 0 & 0 & 0 \\ 0 & 0 & x_{12,r2} & x_{22,r2} & 0 & 0 \\ 0 & 0 & 0 & 0 & x_2 & 0 \\ 0 & 0 & 0 & 0 & 0 & x_2 \end{bmatrix}$ and/or $\begin{bmatrix} x_{11,r2} & x_{21,r2} & 0 & 0 & 0 & 0 \\ 0 & 0 & x_1 & 0 & 0 & 0 \\ 0 & 0 & 0 & x_{11,r2} & x_{21,r2} & 0 \\ 0 & 0 & 0 & 0 & 0 & x_1 \\ x_{12,r2} & x_{22,r2} & 0 & 0 & 0 & 0 \\ 0 & 0 & x_2 & 0 & 0 & 0 \\ 0 & 0 & 0 & x_{12,r2} & x_{22,r2} & 0 \\ 0 & 0 & 0 & 0 & 0 & x_2 \end{bmatrix}$ and/or $\begin{bmatrix} x_{11,r2} & x_{21,r2} & 0 & 0 & 0 & 0 \\ 0 & 0 & x_1 & 0 & 0 & 0 \\ 0 & 0 & 0 & x_1 & 0 & 0 \\ 0 & 0 & 0 & 0 & x_{11,r2} & x_{21,r2} \\ x_{12,r2} & x_{22,r2} & 0 & 0 & 0 & 0 \\ 0 & 0 & x_2 & 0 & 0 & 0 \\ 0 & 0 & 0 & x_2 & 0 & 0 \\ 0 & 0 & 0 & 0 & x_{12,r2} & x_{22,r2} \end{bmatrix}$ and/or

$$\begin{bmatrix} x_1 & 0 & 0 & 0 & 0 & 0 \\ 0 & x_{11,r2} & x_{21,r2} & 0 & 0 & 0 \\ 0 & 0 & 0 & x_{11,r2} & x_{21,r2} & 0 \\ 0 & 0 & 0 & 0 & 0 & x_1 \\ x_2 & 0 & 0 & 0 & 0 & 0 \\ 0 & x_{12,r2} & x_{22,r2} & 0 & 0 & 0 \\ 0 & 0 & 0 & x_{12,r2} & x_{22,r2} & 0 \\ 0 & 0 & 0 & 0 & 0 & x_2 \end{bmatrix}$$ and/or $$\begin{bmatrix} x_1 & 0 & 0 & 0 & 0 & 0 \\ 0 & x_{11,r2} & x_{21,r2} & 0 & 0 & 0 \\ 0 & 0 & 0 & x_1 & 0 & 0 \\ 0 & 0 & 0 & 0 & x_{11,r2} & x_{21,r2} \\ x_2 & 0 & 0 & 0 & 0 & 0 \\ 0 & x_{12,r2} & x_{22,r2} & 0 & 0 & 0 \\ 0 & 0 & 0 & x_2 & 0 & 0 \\ 0 & 0 & 0 & 0 & x_{12,r2} & x_{22,r2} \end{bmatrix}$$ and/or $$\begin{bmatrix} x_1 & 0 & 0 & 0 & 0 & 0 \\ 0 & x_{11,r2} & x_{21,r2} & 0 & 0 & 0 \\ 0 & 0 & 0 & x_1 & 0 & 0 \\ 0 & 0 & 0 & 0 & x_{11,r2} & x_{21,r2} \\ x_2 & 0 & 0 & 0 & 0 & 0 \\ 0 & x_{12,r2} & x_{22,r2} & 0 & 0 & 0 \\ 0 & 0 & 0 & x_2 & 0 & 0 \\ 0 & 0 & 0 & 0 & x_{12,r2} & x_{22,r2} \end{bmatrix}$$. Different columns of the rank1 matrix may use the same or different $W_{2Tx,rank1}$. Different columns of the rank2 matrix may use the same or different $W_{2Tx,rank2}$.

In case that Rank=7, $W_{2Tx,rank1} = \begin{bmatrix} x_1 \\ x_2 \end{bmatrix}$ and $W_{2Tx,rank2} = \begin{bmatrix} x_{11,r2} & x_{21,r2} \\ x_{12,r2} & x_{22,r2} \end{bmatrix}$, a first-type matrix for UL 8Tx seven layers may be $$\begin{bmatrix} x_{11,r2} & x_{21,r2} & 0 & 0 & 0 & 0 & 0 \\ 0 & 0 & x_{11,r2} & x_{21,r2} & 0 & 0 & 0 \\ 0 & 0 & 0 & 0 & x_{11,r2} & x_{21,r2} & 0 \\ 0 & 0 & 0 & 0 & 0 & 0 & x_1 \\ x_{12,r2} & x_{22,r2} & 0 & 0 & 0 & 0 & 0 \\ 0 & 0 & x_{12,r2} & x_{22,r2} & 0 & 0 & 0 \\ 0 & 0 & 0 & 0 & x_{12,r2} & x_{22,r2} & 0 \\ 0 & 0 & 0 & 0 & 0 & 0 & x_2 \end{bmatrix}$$ and/or $$\begin{bmatrix} x_{11,r2} & x_{21,r2} & 0 & 0 & 0 & 0 & 0 \\ 0 & 0 & x_{11,r2} & x_{21,r2} & 0 & 0 & 0 \\ 0 & 0 & 0 & 0 & x_1 & 0 & 0 \\ 0 & 0 & 0 & 0 & 0 & x_{11,r2} & x_{21,r2} \\ x_{12,r2} & x_{22,r2} & 0 & 0 & 0 & 0 & 0 \\ 0 & 0 & x_{12,r2} & x_{22,r2} & 0 & 0 & 0 \\ 0 & 0 & 0 & 0 & x_2 & 0 & 0 \\ 0 & 0 & 0 & 0 & 0 & x_{12,r2} & x_{22,r2} \end{bmatrix}$$ and/or $$\begin{bmatrix} x_{11,r2} & x_{21,r2} & 0 & 0 & 0 & 0 & 0 \\ 0 & 0 & x_1 & 0 & 0 & 0 & 0 \\ 0 & 0 & 0 & x_{11,r2} & x_{21,r2} & 0 & 0 \\ 0 & 0 & 0 & 0 & 0 & x_{11,r2} & x_{21,r2} \\ x_{12,r2} & x_{22,r2} & 0 & 0 & 0 & 0 & 0 \\ 0 & 0 & x_2 & 0 & 0 & 0 & 0 \\ 0 & 0 & 0 & x_{12,r2} & x_{22,r2} & 0 & 0 \\ 0 & 0 & 0 & 0 & 0 & x_{12,r2} & x_{22,r2} \end{bmatrix}$$ and/or $$\begin{bmatrix} x_1 & 0 & 0 & 0 & 0 & 0 & 0 \\ 0 & x_{11,r2} & x_{21,r2} & 0 & 0 & 0 & 0 \\ 0 & 0 & 0 & x_{11,r2} & x_{21,r2} & 0 & 0 \\ 0 & 0 & 0 & 0 & 0 & x_{11,r2} & x_{21,r2} \\ x_2 & 0 & 0 & 0 & 0 & 0 & 0 \\ 0 & x_{12,r2} & x_{22,r2} & 0 & 0 & 0 & 0 \\ 0 & 0 & 0 & x_{12,r2} & x_{22,r2} & 0 & 0 \\ 0 & 0 & 0 & 0 & 0 & x_{12,r2} & x_{22,r2} \end{bmatrix}$$. Different columns of the rank2 matrix may use the same or different $W_{2Tx,rank2}$.

In case that Rank=8, and $W_{2Tx,rank2} = \begin{bmatrix} x_{11,r2} & x_{21,r2} \\ x_{12,r2} & x_{22,r2} \end{bmatrix}$, a first-type matrix for UL 8Tx eight layers may be

$$\begin{bmatrix} x_{11,r2} & x_{21,r2} & 0 & 0 & 0 & 0 & 0 & 0 \\ 0 & 0 & x_{11,r2} & x_{21,r2} & 0 & 0 & 0 & 0 \\ 0 & 0 & 0 & 0 & x_{11,r2} & x_{21,r2} & 0 & 0 \\ 0 & 0 & 0 & 0 & 0 & 0 & x_{11,r2} & x_{21,r2} \\ x_{12,r2} & x_{22,r2} & 0 & 0 & 0 & 0 & 0 & 0 \\ 0 & 0 & x_{12,r2} & x_{22,r2} & 0 & 0 & 0 & 0 \\ 0 & 0 & 0 & 0 & x_{12,r2} & x_{22,r2} & 0 & 0 \\ 0 & 0 & 0 & 0 & 0 & 0 & x_{12,r2} & x_{22,r2} \end{bmatrix}.$$

2. The terminal receives precoding matrix indication information indicated by a network device, where the precoding matrix indication information may specifically be a precoding matrix index.

3. The terminal finds a corresponding precoding matrix from the partial-coherent transmission codebook including the first-type matrix and the non-coherent codebook including the third-type matrix based on the precoding matrix index in the precoding matrix indication information, for performing precoding on data.

Embodiment 6:

The present application provides a method for uplink transmission based on an uplink partial-coherent transmission codebook, which is applied to a terminal with 8 uplink antenna ports, and the method includes the following steps.

1. A network device generates, based on the following way, a set of partial-coherent transmission precoding matrices for each layer, that is, a set of first-type matrices for each layer. Sets of first-type matrices for all layers is stored in the network device as an uplink partial-coherent transmission codebook shown in Table 2.
A rule of obtaining the first-type matrix is the same as that in embodiment five, and will not be described in detail here.

2. If a capability reported by the terminal supports partial-coherent transmission, and each coherent transmission group contains 2 uplink antenna ports, the network device selects a precoding matrix from the above-mentioned partial-coherent transmission codebook and the above-mentioned non-coherent transmission codebook, and generates precoding matrix indication information carrying an index of the precoding matrix.

3. The network device transmits the precoding matrix indication information to the terminal.

In the method provided by the embodiment of the present application, parallel transmission of 8 layers and a maximum of 8 antenna ports may be performed, which may effectively improve uplink throughput.

Based on any of the above embodiments, FIG. 3 is a schematic structural diagram of a terminal according to an embodiment of the present application. As shown in FIG. 3, the terminal includes a memory 320, a transceiver 300 and a processor 310.

The memory 320 is used for storing a computer program, the transceiver 300 is used for receiving and transmitting data under control of the processor 310, and the processor 310 is used for reading the computer program in the memory 320 and performing the following operations:

receiving precoding matrix indication information;

determining, from candidate precoding matrices, a precoding matrix indicated by the precoding matrix indication information, where the candidate precoding matrices include a first-type matrix and/or a second-type matrix, the first-type matrix is determined based on full-coherent codewords and a zero matrix, and the second-type matrix is determined based on partial-coherent codewords or non-coherent codewords; and

performing uplink transmission based on the precoding matrix.

In an embodiment, the transceiver 300 is used for receiving and transmitting data under control of the processor 310.

In FIG. 3, a bus architecture may include any number of interconnected buses and bridges, which are linked together through various circuits of one or more processors represented by the processor 310 and one or more memories represented by the memory 320. The bus architecture may also link together various other circuits, such as peripherals, voltage regulators, and power management circuits, etc., which are well known in the art, and therefore are not further described in the present application. A bus interface provides an interface. The transceiver 300 may include multiple elements, i.e., including a transmitter and a receiver, units for providing communication with various other devices over transmission media including wireless channels, wired channels, fiber optic cables, and the like. For different user devices, a user interface 330 may also be an interface capable of externally or internally connecting required devices, and the connected devices include but are not limited to a small keypad, a display, a speaker, a microphone, a joystick, and the like.

The processor 310 is responsible for managing the bus architecture and general processing, and the memory 320 may store data used by the processor 310 when performing operations.

In some embodiments, the processor 310 may be a central processing unit (CPU), an application specific integrated circuit (ASIC), a field programmable gate array (FPGA), or a complex programmable logic device (CPLD), and the processor 310 may also adopt a multi-core architecture.

The processor calls a computer program stored in the memory to perform any methods provided by the embodiments of the present application based on the obtained executable instructions. The processor and the memory may also be arranged physically separately.

In an embodiment, the first-type matrix is a combination of a matrix W and a matrix Z,

> in case that $2^N$ uplink antenna ports exist in each coherent transmission group, the matrix W includes a matrix in full-coherent codewords for uplink $2^i$ antenna ports, and the matrix Z includes a zero matrix with $2^i$ rows,
>
> where N is a positive integer, $N < \log_2 P$, P is a total quantity of uplink antenna ports, and a value of i is at least one integer from 1 to N.

In an embodiment, in case that $2^K$ uplink antenna ports exist in each coherent transmission group, the first-type matrix is obtained by selecting a combined matrix obtained by any combination of the matrix W and the matrix Z based on at least one of the following rules:

> the matrix W is a matrix in full-coherent codewords for uplink $2^K$ antenna ports, and a difference in quantities of non-zero elements in different rows of the combined matrix is less than or equal to 1; or
>
> the matrix W is a matrix in full-coherent codewords for uplink $2^j$ antenna ports, and a quantity of non-zero elements in each row of the combined matrix is less than or equal to 2,
>
> where K is an integer, $1 < K < \log_2 P$, and a value of j is at least one integer from 1 to K; and
>
> in case that two uplink antenna ports exist in each coherent transmission group, the first-type matrix is obtained by selecting a combined matrix obtained by any combination of the matrix W and the matrix Z based on the following rules: a quantity of non-zero elements in each row of the combined matrix is less than or equal to 2, and a difference in quantities of non-zero elements in different rows of the combined matrix is less than or equal to 1.

In an embodiment, the second-type matrix is $\frac{1}{\sqrt{2}}\begin{bmatrix} A \\ B \end{bmatrix}$, where both the matrix A and the matrix B are matrices in partial-coherent codewords for uplink P/2 antenna ports, or both the matrix A and the matrix B are matrices in non-coherent codewords for uplink P/2 antenna ports.

In an embodiment, the candidate precoding matrix further includes a third-type matrix, and the third-type matrix is a matrix with only one non-zero element in each row and each column.

In an embodiment, the third-type matrix is obtained by selecting any candidate matrix with only one non-zero element in each row and each column based on any one or more of the following rules:

> serial numbers of rows in which non-zero elements of the candidate matrix are located are continuous;
>
> an interval between serial numbers of rows in which non-zero elements in adjacent columns of the candidate matrix are located is P/2;
>
> an interval between serial numbers of rows in which non-zero elements in adjacent columns of the candidate matrix are located is P/2-1; or

an interval between serial numbers of rows in which non-zero elements in adjacent columns of the candidate matrix are located is P/2-2,

where P is a total quantity of uplink antenna ports.

In an embodiment, the candidate precoding matrix is determined based on the following steps:

determining a quantity M of target candidate matrices, and obtaining multiple initial matrix combinations consisting of each M initial precoding matrices in an initial precoding matrix set;

determining an intra-group matrix difference value of each initial matrix combination based on a chordal distance between every two initial precoding matrices in each initial matrix combination; and

selecting, based on intra-group matrix difference values of multiple initial matrix combinations, a candidate matrix combination from the multiple initial matrix combinations, and determining M initial precoding matrices in the candidate matrix combination as the candidate precoding matrices.

It should be noted that the terminal provided by the embodiments of the present application can implement all the method steps in the method embodiments performed by the terminal and may achieve the same effect. The parts and beneficial effects of this embodiment that are the same as those of the method embodiments are not described in detail.

FIG. 4 is a schematic structural diagram of a network device according to an embodiment of the present application. As shown in FIG. 4, the network device includes a memory 420, a transceiver 400 and a processor 410.

The memory 420 is used for storing a computer program, the transceiver 400 is used for receiving and transmitting data under control of the processor, and the processor 410 is used for reading the computer program in the memory and performing the following operations:

generating precoding matrix indication information based on a precoding matrix in candidate precoding matrices, where the candidate precoding matrices include a first-type matrix and/or a second-type matrix, where the first-type matrix is determined based on full-coherent codewords and a zero matrix, and the second-type matrix is determined based on partial-coherent codewords or non-coherent codewords; and

transmitting the precoding matrix indication information to a terminal, where the precoding matrix indication information is used to indicate the precoding matrix, and the precoding matrix is used for uplink transmission.

In FIG. 4, a bus architecture may include any number of interconnected buses and bridges, which are linked together through various circuits of one or more processors represented by the processor 410 and one or more memories represented by the memory 420. The bus architecture may also link together various other circuits, such as peripherals, voltage regulators, and power management circuits, etc., which are well known in the art, and therefore are not further described in the present application. A bus interface provides an interface. The transceiver 400 may include multiple elements, i.e., including a transmitter and a receiver, units for providing communication with various other devices over transmission media including wireless channels, wired channels, fiber optic cables, and the like.

The processor 410 is responsible for managing the bus architecture and general processing, and the memory 420 may store data used by the processor 410 when performing operations.

In an embodiment, the processor 410 may be a central processing unit (CPU), an application specific integrated circuit (ASIC), a field programmable gate array (FPGA) or a complex programmable logic device (CPLD), and the processor may also adopt a multi-core architecture.

The processor calls a computer program stored in the memory to perform any methods provided by the embodiments of the present application based on the obtained executable instructions. The processor and the memory may also be arranged physically separately.

In an embodiment, the first-type matrix is a combination of a matrix W and a matrix Z,

in case that $2^N$ uplink antenna ports exist in each coherent transmission group, the matrix W includes a matrix in full-coherent codewords for uplink $2^i$ antenna ports, and the matrix Z includes a zero matrix with $2^i$ rows,

where N is a positive integer, $N < \log_2 P$, P is a total quantity of uplink antenna ports, and a value of i is at least one integer from 1 to N.

In an embodiment, in case that $2^K$ uplink antenna ports exist in each coherent transmission group, the first-type matrix is obtained by selecting a combined matrix obtained by any combination of the matrix W and the matrix Z based on at least one of the following rules:

the matrix W is a matrix in full-coherent codewords for uplink $2^K$ antenna ports, and a difference in quantities of non-zero elements in different rows of the combined matrix is less than or equal to 1; or

the matrix W is a matrix in full-coherent codewords for uplink $2^j$ antenna ports, and a quantity of non-zero elements in each row of the combined matrix is less than or equal to 2,

where K is an integer, $1 < K < \log_2 P$, and a value of j is at least one integer from 1 to K; and

in case that two uplink antenna ports exist in each coherent transmission group, the first-type matrix is obtained by selecting a combined matrix obtained by any combination of the matrix W and the matrix Z based on the following rules: a quantity of non-zero elements in each row of the combined matrix is less than or equal to 2, and a difference in quantities of non-zero elements in different rows of the combined matrix is less than or equal to 1.

In an embodiment, the second-type matrix is $\frac{1}{\sqrt{2}}\begin{bmatrix} A \\ B \end{bmatrix}$, where both the matrix A and the matrix B are matrices in partial-coherent codewords for uplink P/2 antenna ports, or both the matrix A and the matrix B are matrices in non-coherent codewords for uplink P/2 antenna ports.

In an embodiment, the candidate precoding matrix further includes a third-type matrix, and the third-type matrix is a matrix with only one non-zero element in each row and each column.

In an embodiment, the third-type matrix is obtained by selecting any candidate matrix with only one non-zero element in each row and each column based on any one or more of the following rules:

serial numbers of rows in which non-zero elements of the candidate matrix are located are continuous;

an interval between serial numbers of rows in which non-zero elements in adjacent columns of the candidate matrix are located is P/2;

an interval between serial numbers of rows in which non-zero elements in adjacent columns of the candidate matrix are located is P/2-1; or

an interval between serial numbers of rows in which non-zero elements in adjacent columns of the candidate matrix are located is P/2-2,

where P is a total quantity of uplink antenna ports.

In an embodiment, the candidate precoding matrix is determined based on the following steps:

determining a quantity M of target candidate matrices, and obtaining multiple initial matrix combinations consisting of each M initial precoding matrices in an initial precoding matrix set;

determining an intra-group matrix difference value of each initial matrix combination based on a chordal distance between every two initial precoding matrices in each initial matrix combination; and

selecting, based on intra-group matrix difference values of multiple initial matrix combinations, a candidate matrix combination from the multiple initial matrix combinations, and determining M initial precoding matrices in the candidate matrix combination as the candidate precoding matrices.

It should be noted that the network device provided by the embodiments of the present application can implement all the method steps in the method embodiments performed by the network device and may achieve the same effect. The parts and beneficial effects of this embodiment that are the same as those of the method embodiments are not described in detail.

FIG. 5 is a first schematic structural diagram of an apparatus for uplink transmission according to an embodiment of the present application. As shown in FIG. 5, the apparatus for uplink transmission includes:

a receiving unit 510, used for receiving precoding matrix indication information;

a selecting unit 520, used for determining, from candidate precoding matrices, a precoding matrix indicated by the precoding matrix indication information, where the candidate precoding matrices include a first-type matrix and/or a second-type matrix, the first-type matrix is determined based on full-coherent codewords and a zero matrix, and the second-type matrix is determined based on partial-coherent codewords or non-coherent codewords; and

a precoding unit 530, used for performing uplink transmission based on the precoding matrix.

In an embodiment, the first-type matrix is a combination of a matrix W and a matrix Z,

in case that $2^N$ uplink antenna ports exist in each coherent transmission group, the matrix W includes a matrix in full-coherent codewords for uplink $2^i$ antenna ports, and the matrix Z includes a zero matrix with $2^i$ rows,

where N is a positive integer, $N < \log_2 P$, P is a total quantity of uplink antenna ports, and a value of i is at least one integer from 1 to N.

In an embodiment, in case that $2^K$ uplink antenna ports exist in each coherent transmission group, the first-type matrix is obtained by selecting a combined matrix obtained by any combination of the matrix W and the matrix Z based on at least one of the following rules:

the matrix W is a matrix in full-coherent codewords for uplink $2^K$ antenna ports, and a difference in quantities of non-zero elements in different rows of the combined matrix is less than or equal to 1; or

the matrix W is a matrix in full-coherent codewords for uplink $2^j$ antenna ports, and a quantity of non-zero elements in each row of the combined matrix is less than or equal to 2,

where K is an integer, $1 < K < \log_2 P$, and a value of j is at least one integer from 1 to K; and

in case that two uplink antenna ports exist in each coherent transmission group, the first-type matrix is obtained by selecting a combined matrix obtained by any combination of the matrix W and the matrix Z based on the following rules: a quantity of non-zero elements in each row of the combined matrix is less than or equal to 2, and a difference in quantities of non-zero elements in different rows of the combined matrix is less than or equal to 1.

In an embodiment, the second-type matrix is $\frac{1}{\sqrt{2}}\begin{bmatrix} A \\ B \end{bmatrix}$, where both the matrix A and the matrix B are matrices in partial-coherent codewords for uplink P/2 antenna ports, or both the matrix A and the matrix B are matrices in non-coherent codewords for uplink P/2 antenna ports.

In an embodiment, the candidate precoding matrix further includes a third-type matrix, and the third-type matrix is a matrix with only one non-zero element in each row and each column.

In an embodiment, the third-type matrix is obtained by selecting any candidate matrix with only one non-zero element in each row and each column based on any one or more of the following rules:

serial numbers of rows in which non-zero elements of the candidate matrix are located are continuous;

an interval between serial numbers of rows in which non-zero elements in adjacent columns of the candidate matrix are located is P/2;

an interval between serial numbers of rows in which non-zero elements in adjacent columns of the candidate matrix are located is P/2-1; or

an interval between serial numbers of rows in which non-zero elements in adjacent columns of the candidate matrix are located is P/2-2,

where P is a total quantity of uplink antenna ports.

In an embodiment, the apparatus further includes a candidate matrix selecting unit, used for:

determining a quantity M of target candidate matrices, and obtaining multiple initial matrix combinations consisting of each M initial precoding matrices in an initial precoding matrix set;

determining an intra-group matrix difference value of each initial matrix combination based on a chordal distance between every two initial precoding matrices in each initial matrix combination; and

selecting, based on intra-group matrix difference values of multiple initial matrix combinations, a candidate matrix combination from the multiple initial matrix combinations, and determining M initial precoding matrices in the candidate matrix combination as the candidate precoding matrices.

In an embodiment, the apparatus for uplink transmission provided by the embodiments of the present application can implement all the method steps in the method embodiments performed by a terminal and may achieve the same effect. The parts and beneficial effects of this embodiment that are the same as those of the method embodiments are not described in detail.

FIG. 6 is a second schematic structural diagram of an apparatus for uplink transmission according to an embodiment of the present application. As shown in FIG. 6, the apparatus for uplink transmission includes:

a generating unit 610, used for generating precoding matrix indication information based on a precoding matrix in candidate precoding matrices, where the candidate precoding matrices include a first-type matrix and/or a second-type matrix, where the first-type matrix is determined based on full-coherent codewords and a zero matrix, and the second-type matrix is determined based on partial-coherent codewords or non-coherent codewords; and

a transmitting unit 620, used for transmitting the precoding matrix indication information to a terminal, where the precoding matrix indication information is used to indicate the precoding matrix, and the precoding matrix is used for uplink transmission.

In an embodiment, the first-type matrix is a combination of a matrix W and a matrix Z,

in case that $2^N$ uplink antenna ports exist in each coherent transmission group, the matrix W includes a matrix in full-coherent codewords for uplink $2^i$ antenna ports, and the matrix Z includes a zero matrix with $2^i$ rows,

where N is a positive integer, $N < \log_2 P$, P is a total quantity of uplink antenna ports, and a value of i is at least one integer from 1 to N.

In an embodiment, in case that $Z^K$ uplink antenna ports exist in each coherent transmission group, the first-type matrix is obtained by selecting a combined matrix obtained by any combination of the matrix W and the matrix Z based on at least one of the following rules:

the matrix W is a matrix in full-coherent codewords for uplink $2^K$ antenna ports, and a difference in quantities of non-zero elements in different rows of the combined matrix is less than or equal to 1; or

the matrix W is a matrix in full-coherent codewords for uplink $2^j$ antenna ports, and a quantity of non-zero elements in each row of the combined matrix is less than or equal to 2,

where K is an integer, $1 < K < \log_2 P$, and a value of j is at least one integer from 1 to K; and

in case that two uplink antenna ports exist in each coherent transmission group, the first-type matrix is obtained by selecting a combined matrix obtained by any combination of the matrix W and the matrix Z based on the following rules: a quantity of non-zero elements in each row of the combined matrix is less than or equal to 2, and a difference in quantities of non-zero elements in different rows of the combined matrix is less than or equal to 1.

In an embodiment, the second-type matrix is $\frac{1}{\sqrt{2}}\begin{bmatrix}A\\B\end{bmatrix}$, where both the matrix A and the matrix B are matrices in partial-coherent codewords for uplink P/2 antenna ports, or both the matrix A and the matrix B are matrices in non-coherent codewords for uplink P/2 antenna ports.

In an embodiment, the candidate precoding matrix further includes a third-type matrix, and the third-type matrix is a matrix with only one non-zero element in each row and each column.

In an embodiment, the third-type matrix is obtained by selecting any candidate matrix with only one non-zero element in each row and each column based on any one or more of the following rules:

serial numbers of rows in which non-zero elements of the candidate matrix are located are continuous;

an interval between serial numbers of rows in which non-zero elements in adjacent columns of the candidate matrix are located is P/2;

an interval between serial numbers of rows in which non-zero elements in adjacent columns of the candidate matrix are located is P/2-1; or

an interval between serial numbers of rows in which non-zero elements in adjacent columns of the candidate matrix are located is P/2-2,

where P is a total quantity of uplink antenna ports.

In an embodiment, the apparatus further includes a candidate matrix selecting unit, used for:

determining a quantity M of target candidate matrices, and obtaining multiple initial matrix combinations consisting of each M initial precoding matrices in an initial precoding matrix set;

determining an intra-group matrix difference value of each initial matrix combination based on a chordal distance between every two initial precoding matrices in each initial matrix combination; and

selecting, based on intra-group matrix difference values of multiple initial matrix combinations, a candidate matrix combination from the multiple initial matrix combinations, and determining M initial precoding matrices in the candidate matrix combination as the candidate precoding matrices.

In an embodiment, the apparatus for uplink transmission provided by the embodiments of the present application can implement all the method steps in the method embodiments performed by a network device and may achieve the same effect. The parts and beneficial effects of this embodiment that are the same as those of the method embodiments are not described in detail.

It should be noted that, the division of units in the embodiments of the present application is schematic, and is only a logical function division, and there may be other division manners in actual implementation. In addition, the functional units in the various embodiments of the present application may be integrated into one processing unit, or each unit may exist alone physically, or two or more units may be integrated into one unit. The above-mentioned integrated unit may be implemented in the form of hardware or software functional unit.

If the integrated unit is implemented in the form of a software functional unit and sold or used as an independent product, it may be stored in a processor-readable storage medium. Based on such understanding, the solutions of the present application in essence or a part of the solutions that contributes to the prior art, or all or part of the solutions, may be embodied in the form of a software product, which is stored in a storage medium, including several instructions to cause a computer device (which may be a personal computer, server, or network device, etc.) or a processor to perform all or part of the steps of the methods described in the respective embodiments of the present application. The storage medium described above includes various media that may store program codes such as a U disk, a mobile hard disk, a read-only memory (ROM), a random access memory (RAM), a magnetic disk, or a compact disk.

In an embodiment, an embodiment of the present application further provides a processor-readable storage medium, where the processor-readable storage medium stores a computer program, and the computer program is used to cause a processor to perform the methods provided by the above embodiments, including:

receiving precoding matrix indication information;

determining, from candidate precoding matrices, a precoding matrix indicated by the precoding matrix indication information, where the candidate precoding matrices include a first-type matrix and/or a second-type matrix, the first-type matrix is determined based on full-coherent codewords and a zero matrix, and the second-type matrix is determined based on partial-coherent codewords or non-coherent codewords; and

performing uplink transmission based on the precoding matrix.

Alternatively, the method includes:

generating precoding matrix indication information based on a precoding matrix in candidate precoding matrices, where the candidate precoding matrices include a first-type matrix and/or a second-type matrix, where the first-type matrix is determined based on full-coherent codewords and a zero matrix, and the second-type matrix is determined based on partial-coherent codewords or non-coherent codewords; and

transmitting the precoding matrix indication information to a terminal, where the precoding matrix indication information is used to indicate the precoding matrix, and the precoding matrix is used for uplink transmission.

It should be noted that: the processor-readable storage medium may be any available medium or data storage device that may be accessed by the processor, including but not limited to, a magnetic storage (e.g., a floppy disk, a hard disk, a magnetic tape, a magneto-optical disk (MO), etc.), an optical memory (such as CD, DVD, BD, HVD, etc.), and a semiconductor memory (such as ROM, EPROM, EEPROM, a non-volatile memory (NAND FLASH), a solid-state drive (SSD)), etc.

It should also be noted that the solutions provided by the embodiments of the present application may be applied to a variety of systems, especially 5G systems. For example, the applicable systems may include a global system of mobile communication (GSM) system, a code division multiple access (CDMA) system, a wideband code division multiple access (WCDMA) general packet radio service (GPRS) system, a long term evolution (LTE) system, an LTE frequency division duplex (FDD) system, an LTE time division duplex (TDD) system, a long term evolution advanced (LTE-A) system, a universal mobile telecommunication system (UMTS), a worldwide interoperability for microwave access (WiMAX) system, a 5G new radio (NR) system, etc. These systems include a terminal device and a network device. The system may further include a core network parts, such as an evolved packet system (EPS), a 5G system (5GS), etc.

The terminal device involved in the embodiments of the present application may be a device that provides voice and/or data connectivity to a user, a handheld device with a wireless connection function, or other processing devices connected to a wireless modem. In different systems, the names of terminal devices may also be different. For example, in a 5G system, the terminal device may be called a user equipment (UE). A wireless terminal device may communicate with one or more core networks (CN) via a radio access network (RAN). The wireless terminal device may be a mobile terminal device, such as a mobile phone (or a "cellular" phone) and a computer with a mobile terminal device. For example, it may be a portable, pocket-sized, handheld, computer-built-in or vehicle-mounted mobile device that exchanges language and/or data with a radio access network. For example, they may be personal communication service (PCS) phones, cordless phones, session initiated protocol (SIP) phones, wireless local loop (WLL) stations, personal digital assistants (PDAs), and other devices. The wireless terminal device may also be referred to as a system, a subscriber unit, a subscriber station, a mobile station, a mobile, a remote station, an access point, a remote terminal device, an access terminal device, a user terminal device, a user agent, or a user device, which is not limited in the embodiments of the present application.

The network device involved in the embodiments of the present application may be a base station. The base station may include multiple cells that provide services to a terminal. Depending on the specific application scenario, the base station may also be referred to as an access point, or may be a device in an access network that communicates with a wireless terminal device through one or more sectors on an air interface, or other names. The network device may be used to interchange received air frames with Internet Protocol (IP) packets, and serve as a router between the wireless terminal device and the rest of the access network, where the rest of the access network may include an IP communication network. The network device may also coordinate the attribute management of the air interface. For example, the network device involved in the embodiments of the present application may be a base transceiver station (BTS) in the global system for mobile communications (GSM) or code division multiple access (CDMA), or a network device (node B) in wide-band code division multiple access (WCDMA), or an evolutional network device (eNB or e-NodeB) in the long term evolution (LTE) system, a 5G base station (gNB) in the 5G network architecture (next generation system), or a home evolved node B (HeNB), a relay node, a home base station (femto), a pico base station (pico), etc., which is not limited in the embodiments of the present application. In some network structures, the network device may include a centralized unit (CU) node and a distributed unit (DU) node, and the centralized unit and the distributed unit may also be arranged geographically separately.

Network devices and terminal devices may each use one or more antennas for multi-input multi-output (MIMO) transmission. The MIMO transmission may be single user MIMO (SU-MIMO) or multi user MIMO (MU-MIMO). Depending on the form and the quantity of antenna combinations, MIMO transmission may be 2D-MIMO, 3D-MIMO, FD-MIMO or massive-MIMO, or may be diversity transmission, precoding transmission or beamforming transmission, etc.

As will be appreciated by those skilled in the art, embodiments of the present application may be provided as a method, system, or computer program product. Accordingly, the present application may take the form of an entirely hardware embodiment, an entirely software embodiment, or an embodiment combining software and hardware aspects. Furthermore, the present application may take the form of a computer program product embodied on one or more computer-usable storage media having computer-usable program code embodied therein, including but not limited to disk storage, optical storage, and the like.

The present application is described with reference to flow charts and/or block diagrams of methods, apparatus (systems), and computer program products according to embodiments of the present application. It will be understood that each flow and/or block in the flow charts and/or block diagrams, and combinations thereof may be implemented by computer-executable instructions. These computer-executable instructions may be provided to processors of a general purpose computer, a special purpose computer, an embedded processor or other programmable data processing device to produce a machine and the instructions executed by the processor of the computer or other programmable data processing device form a means for performing the functions specified in one or more flows in a flowchart and/or one or more blocks of a block diagram.

These processor-executable instructions may also be stored in a processor-readable memory capable of directing a computer or other programmable data processing apparatus to operate in a particular manner, and the instructions stored in the processor-readable memory may result in a manufacture including instruction means, the instruction means may perform the functions specified in one or more flows of the flowchart and/or one or more blocks of the block diagram.

These processor-executable instructions may also be loaded onto a computer or other programmable data processing device to cause a series of operational steps to be performed on the computer or other programmable device to produce a computer-implemented process and instructions performed on the computer or other programmable devices provide steps for performing the functions specified in one or more flows of the flowchart and/or one or more blocks of the block diagram.

It will be apparent to those skilled in the art that various modifications and variations may be made in the present application without departing from the scope of the present application. Thus, provided that these modifications and variations of the present application fall within the scope of the claims of the present application and their equivalents, the present application is also intended to cover such modifications and variations.

## Claims

1. A method for uplink transmission, comprising:

   receiving precoding matrix indication information;
   determining, from candidate precoding matrices, a precoding matrix indicated by the precoding matrix indication information, wherein the candidate precoding matrix comprises a first-type matrix and/or a second-type matrix, the first-type matrix is determined based on full-coherent codewords and a zero matrix, and the second-type matrix is determined based on partial-coherent codewords or non-coherent codewords; and
   performing uplink transmission based on the precoding matrix.

2. The method of claim 1, wherein the first-type matrix is a combination of a matrix W and a matrix Z,

   in case that $2^N$ uplink antenna ports exist in each coherent transmission group, the matrix W comprises a matrix in full-coherent codewords for uplink $2^i$ antenna ports, and the matrix Z comprises a zero matrix with $2^i$ rows, wherein N is a positive integer, $N < \log_2 P$, P is a total quantity of uplink antenna ports, and a value of i is at least one integer from 1 to N.

3. The method of claim 2, wherein in case that $2^K$ uplink antenna ports exist in each coherent transmission group, the first-type matrix is obtained by selecting a combined matrix obtained by any combination of the matrix W and the matrix Z based on at least one of the following rules:

   the matrix W is a matrix in full-coherent codewords for uplink $2^K$ antenna ports, and a difference in quantities of non-zero elements in different rows of the combined matrix is less than or equal to 1; or
   the matrix W is a matrix in full-coherent codewords for uplink $2^i$ antenna ports, and a quantity of non-zero elements in each row of the combined matrix is less than or equal to 2,
   wherein K is an integer, $1 < K < \log_2 P$, and a value of j is at least one integer from 1 to K; and
   in case that two uplink antenna ports exist in each coherent transmission group, the first-type matrix is obtained by selecting a combined matrix obtained by any combination of the matrix W and the matrix Z based on the following rules:
   a quantity of non-zero elements in each row of the combined matrix is less than or equal to 2, and a difference in quantities of non-zero elements in different rows of the combined matrix is less than or equal to 1.

4. The method of claim 1, wherein the second-type matrix is $\frac{1}{\sqrt{2}}\begin{bmatrix}A\\B\end{bmatrix}$, wherein both the matrix A and the matrix B are matrices in partial-coherent codewords for uplink P/2 antenna ports, or both the matrix A and the matrix B are matrices in non-coherent codewords for uplink P/2 antenna ports.

5. The method of claim 1, wherein the candidate precoding matrix further comprises a third-type matrix, and the third-type matrix is a matrix with only one non-zero element in each row and each column.

6. The method of claim 5, wherein the third-type matrix is obtained by selecting any candidate matrix with only one non-zero element in each row and each column based on any one or more of the following rules:

serial numbers of rows in which non-zero elements of the candidate matrix are located are continuous;
an interval between serial numbers of rows in which non-zero elements in adjacent columns of the candidate matrix are located is P/2;
an interval between serial numbers of rows in which non-zero elements in adjacent columns of the candidate matrix are located is P/2-1; or
an interval between serial numbers of rows in which non-zero elements in adjacent columns of the candidate matrix are located is P/2-2,
wherein P is a total quantity of uplink antenna ports.

7. The method of any one of claims 1 to 6, wherein the candidate precoding matrix is determined based on the following steps:

determining a quantity M of target candidate matrices, and obtaining multiple initial matrix combinations consisting of each M initial precoding matrices in an initial precoding matrix set;
determining an intra-group matrix difference value of each initial matrix combination based on a chordal distance between every two initial precoding matrices in each initial matrix combination; and
selecting, based on intra-group matrix difference values of multiple initial matrix combinations, a candidate matrix combination from the multiple initial matrix combinations, and determining M initial precoding matrices in the candidate matrix combination as the candidate precoding matrices.

8. A method for uplink transmission, comprising:

generating precoding matrix indication information based on a precoding matrix in candidate precoding matrices, wherein the candidate precoding matrix comprises a first-type matrix and/or a second-type matrix, wherein the first-type matrix is determined based on full-coherent codewords and a zero matrix, and the second-type matrix is determined based on partial-coherent codewords or non-coherent codewords; and
transmitting the precoding matrix indication information to a terminal, wherein the precoding matrix indication information is used to indicate the precoding matrix, and the precoding matrix is used for uplink transmission.

9. The method of claim 8, wherein the first-type matrix is a combination of a matrix W and a matrix Z,

in case that $2^N$ uplink antenna ports exist in each coherent transmission group, the matrix W comprises a matrix in full-coherent codewords for uplink $2^i$ antenna ports, and the matrix Z comprises a zero matrix with $2^i$ rows, wherein N is a positive integer, $N < \log_2 P$, P is a total quantity of uplink antenna ports, and a value of i is at least one integer from 1 to N.

10. The method of claim 9, wherein in case that $2^K$ uplink antenna ports exist in each coherent transmission group, the first-type matrix is obtained by selecting a combined matrix obtained by any combination of the matrix W and the matrix Z based on at least one of the following rules:

the matrix W is a matrix in full-coherent codewords for uplink $2^K$ antenna ports, and a difference in quantities of non-zero elements in different rows of the combined matrix is less than or equal to 1; or
the matrix W is a matrix in full-coherent codewords for uplink $2^j$ antenna ports, and a quantity of non-zero elements in each row of the combined matrix is less than or equal to 2,
wherein K is an integer, $1 < K < \log_2 P$, and a value of j is at least one integer from 1 to K; and

in case that two uplink antenna ports exist in each coherent transmission group, the first-type matrix is obtained by selecting a combined matrix obtained by any combination of the matrix W and the matrix Z based on the following rules:
a quantity of non-zero elements in each row of the combined matrix is less than or equal to 2, and a difference in quantities of non-zero elements in different rows of the combined matrix is less than or equal to 1.

**11.** The method of claim 8, wherein the second-type matrix is $\frac{1}{\sqrt{2}}\begin{bmatrix} A \\ B \end{bmatrix}$, wherein both the matrix A and the matrix B are matrices in partial-coherent codewords for uplink P/2 antenna ports, or both the matrix A and the matrix B are matrices in non-coherent codewords for uplink P/2 antenna ports.

**12.** The method of claim 8, wherein the candidate precoding matrix further comprises a third-type matrix, and the third-type matrix is a matrix with only one non-zero element in each row and each column.

**13.** The method of claim 12, wherein the third-type matrix is obtained by selecting any candidate matrix with only one non-zero element in each row and each column based on any one or more of the following rules:

serial numbers of rows in which non-zero elements of the candidate matrix are located are continuous;
an interval between serial numbers of rows in which non-zero elements in adjacent columns of the candidate matrix are located is P/2;
an interval between serial numbers of rows in which non-zero elements in adjacent columns of the candidate matrix are located is P/2-1; or
an interval between serial numbers of rows in which non-zero elements in adjacent columns of the candidate matrix are located is P/2-2,
wherein P is a total quantity of uplink antenna ports.

**14.** The method of any one of claims 8 to 13, wherein the candidate precoding matrix is determined based on the following steps:

determining a quantity M of target candidate matrices, and obtaining multiple initial matrix combinations consisting of each M initial precoding matrices in an initial precoding matrix set;
determining an intra-group matrix difference value of each initial matrix combination based on a chordal distance between every two initial precoding matrices in each initial matrix combination; and
selecting, based on intra-group matrix difference values of multiple initial matrix combinations, a candidate matrix combination from the multiple initial matrix combinations, and determining M initial precoding matrices in the candidate matrix combination as the candidate precoding matrices.

**15.** A terminal, comprising a memory, a transceiver and a processor,
wherein the memory is used for storing a computer program, the transceiver is used for receiving and transmitting data under control of the processor, and the processor is used for reading the computer program in the memory and performing the following operations:

receiving precoding matrix indication information;
determining, from candidate precoding matrices, a precoding matrix indicated by the precoding matrix indication information, wherein the candidate precoding matrix comprises a first-type matrix and/or a second-type matrix, the first-type matrix is determined based on full-coherent codewords and a zero matrix, and the second-type matrix is determined based on partial-coherent codewords or non-coherent codewords; and
performing uplink transmission based on the precoding matrix.

**16.** The terminal of claim 15, wherein the first-type matrix is a combination of a matrix W and a matrix Z,

in case that $2^N$ uplink antenna ports exist in each coherent transmission group, the matrix W comprises a matrix in full-coherent codewords for uplink $2^i$ antenna ports, and the matrix Z comprises a zero matrix with $2^i$ rows, wherein N is a positive integer, $N < \log_2 P$, P is a total quantity of uplink antenna ports, and a value of i is at least one integer from 1 to N.

**17.** The terminal of claim 16, wherein in case that $2^K$ uplink antenna ports exist in each coherent transmission group, the first-type matrix is obtained by selecting a combined matrix obtained by any combination of the matrix W and the matrix Z based on at least one of the following rules:

the matrix W is a matrix in full-coherent codewords for uplink $2^K$ antenna ports, and a difference in quantities of non-zero elements in different rows of the combined matrix is less than or equal to 1; or
the matrix W is a matrix in full-coherent codewords for uplink $2^j$ antenna ports, and a quantity of non-zero elements in each row of the combined matrix is less than or equal to 2,
wherein K is an integer, $1 < K < \log_2 P$, and a value of j is at least one integer from 1 to K; and
in case that two uplink antenna ports exist in each coherent transmission group, the first-type matrix is obtained by selecting a combined matrix obtained by any combination of the matrix W and the matrix Z based on the following rules:
a quantity of non-zero elements in each row of the combined matrix is less than or equal to 2, and a difference in quantities of non-zero elements in different rows of the combined matrix is less than or equal to 1.

**18.** The terminal of claim 15, wherein the second-type matrix is $\frac{1}{\sqrt{2}}\begin{bmatrix} A \\ B \end{bmatrix}$, wherein both the matrix A and the matrix B are matrices in partial-coherent codewords for uplink P/2 antenna ports, or both the matrix A and the matrix B are matrices in non-coherent codewords for uplink P/2 antenna ports.

**19.** The terminal of claim 15, wherein the candidate precoding matrix further comprises a third-type matrix, and the third-type matrix is a matrix with only one non-zero element in each row and each column.

**20.** The terminal of claim 19, wherein the third-type matrix is obtained by selecting any candidate matrix with only one non-zero element in each row and each column based on any one or more of the following rules:

serial numbers of rows in which non-zero elements of the candidate matrix are located are continuous;
an interval between serial numbers of rows in which non-zero elements in adjacent columns of the candidate matrix are located is P/2;
an interval between serial numbers of rows in which non-zero elements in adjacent columns of the candidate matrix are located is P/2-1; or
an interval between serial numbers of rows in which non-zero elements in adjacent columns of the candidate matrix are located is P/2-2,
wherein P is a total quantity of uplink antenna ports.

**21.** The terminal of any one of claims 15 to 20, wherein the candidate precoding matrix is determined based on the following steps:

determining a quantity M of target candidate matrices, and obtaining multiple initial matrix combinations consisting of each M initial precoding matrices in an initial precoding matrix set;
determining an intra-group matrix difference value of each initial matrix combination based on a chordal distance between every two initial precoding matrices in each initial matrix combination; and
selecting, based on intra-group matrix difference values of multiple initial matrix combinations, a candidate matrix combination from the multiple initial matrix combinations, and determining M initial precoding matrices in the candidate matrix combination as the candidate precoding matrices.

**22.** A network device, comprising a memory, a transceiver and a processor,
wherein the memory is used for storing a computer program, the transceiver is used for receiving and transmitting data under control of the processor, and the processor is used for reading the computer program in the memory and performing the following operations:

generating precoding matrix indication information based on a precoding matrix in candidate precoding matrices, wherein the candidate precoding matrix comprises a first-type matrix and/or a second-type matrix, wherein the first-type matrix is determined based on full-coherent codewords and a zero matrix, and the second-type matrix is determined based on partial-coherent codewords or non-coherent codewords; and
transmitting the precoding matrix indication information to a terminal, wherein the precoding matrix indication information is used to indicate the precoding matrix, and the precoding matrix is used for uplink transmission.

**23.** The network device of claim 22, wherein the first-type matrix is a combination of a matrix W and a matrix Z,

in case that $2^N$ uplink antenna ports exist in each coherent transmission group, the matrix W comprises a matrix in full-coherent codewords for uplink $2^i$ antenna ports, and the matrix Z comprises a zero matrix with $2^i$ rows, wherein N is a positive integer, $N < \log_2 P$, P is a total quantity of uplink antenna ports, and a value of i is at least one integer from 1 to N.

**24.** The network device of claim 23, wherein in case that $2^K$ uplink antenna ports exist in each coherent transmission group, the first-type matrix is obtained by selecting a combined matrix obtained by any combination of the matrix W and the matrix Z based on at least one of the following rules:

the matrix W is a matrix in full-coherent codewords for uplink $2^K$ antenna ports, and a difference in quantities of non-zero elements in different rows of the combined matrix is less than or equal to 1; or
the matrix W is a matrix in full-coherent codewords for uplink $2^i$ antenna ports, and a quantity of non-zero elements in each row of the combined matrix is less than or equal to 2,
wherein K is an integer, $1 < K < \log_2 P$, and a value of j is at least one integer from 1 to K; and
in case that two uplink antenna ports exist in each coherent transmission group, the first-type matrix is obtained by selecting a combined matrix obtained by any combination of the matrix W and the matrix Z based on the following rules:
a quantity of non-zero elements in each row of the combined matrix is less than or equal to 2, and a difference in quantities of non-zero elements in different rows of the combined matrix is less than or equal to 1.

**25.** The network device of claim 22, wherein the second-type matrix is $\frac{1}{\sqrt{2}}\begin{bmatrix} A \\ B \end{bmatrix}$, wherein both the matrix A and the matrix B are matrices in partial-coherent codewords for uplink P/2 antenna ports, or both the matrix A and the matrix B are matrices in non-coherent codewords for uplink P/2 antenna ports.

**26.** The network device of claim 22, wherein the candidate precoding matrix further comprises a third-type matrix, and the third-type matrix is a matrix with only one non-zero element in each row and each column.

**27.** The network device of claim 26, wherein the third-type matrix is obtained by selecting any candidate matrix with only one non-zero element in each row and each column based on any one or more of the following rules:

serial numbers of rows in which non-zero elements of the candidate matrix are located are continuous;
an interval between serial numbers of rows in which non-zero elements in adjacent columns of the candidate matrix are located is P/2;
an interval between serial numbers of rows in which non-zero elements in adjacent columns of the candidate matrix are located is P/2-1; or
an interval between serial numbers of rows in which non-zero elements in adjacent columns of the candidate matrix are located is P/2-2,
wherein P is a total quantity of uplink antenna ports.

**28.** The network device of any one of claims 22 to 27, wherein the candidate precoding matrix is determined based on the following steps:

determining a quantity M of target candidate matrices, and obtaining multiple initial matrix combinations consisting of each M initial precoding matrices in an initial precoding matrix set;
determining an intra-group matrix difference value of each initial matrix combination based on a chordal distance between every two initial precoding matrices in each initial matrix combination; and
selecting, based on intra-group matrix difference values of multiple initial matrix combinations, a candidate matrix combination from the multiple initial matrix combinations, and determining M initial precoding matrices in the candidate matrix combination as the candidate precoding matrices.

**29.** An apparatus for uplink transmission, comprising:

a receiving unit, used for receiving precoding matrix indication information;
a selecting unit, used for determining, from candidate precoding matrices, a precoding matrix indicated by the precoding matrix indication information, wherein the candidate precoding matrix comprises a first-type matrix and/or a second-type matrix, the first-type matrix is determined based on full-coherent codewords and a zero matrix, and the second-type matrix is determined based on partial-coherent codewords or non-coherent codewords; and

a precoding unit, used for performing uplink transmission based on the precoding matrix.

**30.** The apparatus of claim 29, wherein the first-type matrix is a combination of a matrix W and a matrix Z,

in case that $2^N$ uplink antenna ports exist in each coherent transmission group, the matrix W comprises a matrix in full-coherent codewords for uplink $2^i$ antenna ports, and the matrix Z comprises a zero matrix with $2^i$ rows, wherein N is a positive integer, $N < \log_2 P$, P is a total quantity of uplink antenna ports, and a value of i is at least one integer from 1 to N.

**31.** The apparatus of claim 30, wherein in case that $2^K$ uplink antenna ports exist in each coherent transmission group, the first-type matrix is obtained by selecting a combined matrix obtained by any combination of the matrix W and the matrix Z based on at least one of the following rules:

the matrix W is a matrix in full-coherent codewords for uplink $2^K$ antenna ports, and a difference in quantities of non-zero elements in different rows of the combined matrix is less than or equal to 1; or

the matrix W is a matrix in full-coherent codewords for uplink $2^j$ antenna ports, and a quantity of non-zero elements in each row of the combined matrix is less than or equal to 2,

wherein K is an integer, $1 < K < \log_2 P$, and a value of j is at least one integer from 1 to K; and

in case that two uplink antenna ports exist in each coherent transmission group, the first-type matrix is obtained by selecting a combined matrix obtained by any combination of the matrix W and the matrix Z based on the following rules:

a quantity of non-zero elements in each row of the combined matrix is less than or equal to 2, and a difference in quantities of non-zero elements in different rows of the combined matrix is less than or equal to 1.

**32.** The apparatus of claim 29, wherein the second-type matrix is $\frac{1}{\sqrt{2}}\begin{bmatrix}A\\B\end{bmatrix}$, wherein both the matrix A and the matrix B are matrices in partial-coherent codewords for uplink P/2 antenna ports, or both the matrix A and the matrix B are matrices in non-coherent codewords for uplink P/2 antenna ports.

**33.** The apparatus of claim 29, wherein the candidate precoding matrix further comprises a third-type matrix, and the third-type matrix is a matrix with only one non-zero element in each row and each column.

**34.** The apparatus of claim 33, wherein the third-type matrix is obtained by selecting any candidate matrix with only one non-zero element in each row and each column based on any one or more of the following rules:

serial numbers of rows in which non-zero elements of the candidate matrix are located are continuous;

an interval between serial numbers of rows in which non-zero elements in adjacent columns of the candidate matrix are located is P/2;

an interval between serial numbers of rows in which non-zero elements in adjacent columns of the candidate matrix are located is P/2-1; or

an interval between serial numbers of rows in which non-zero elements in adjacent columns of the candidate matrix are located is P/2-2,

wherein P is a total quantity of uplink antenna ports.

**35.** The apparatus of any one of claims 29 to 34, wherein the candidate precoding matrix is determined based on the following steps:

determining a quantity M of target candidate matrices, and obtaining multiple initial matrix combinations consisting of each M initial precoding matrices in an initial precoding matrix set;

determining an intra-group matrix difference value of each initial matrix combination based on a chordal distance between every two initial precoding matrices in each initial matrix combination; and

selecting, based on intra-group matrix difference values of multiple initial matrix combinations, a candidate matrix combination from the multiple initial matrix combinations, and determining M initial precoding matrices in the candidate matrix combination as the candidate precoding matrices.

**36.** An apparatus for uplink transmission, comprising:

a generating unit, used for generating precoding matrix indication information based on a precoding matrix in candidate precoding matrices, wherein the candidate precoding matrix comprises a first-type matrix and/or a second-type matrix, wherein the first-type matrix is determined based on full-coherent codewords and a zero matrix, and the second-type matrix is determined based on partial-coherent codewords or non-coherent codewords; and
a transmitting unit, used for transmitting the precoding matrix indication information to a terminal, wherein the precoding matrix indication information is used to indicate the precoding matrix, and the precoding matrix is used for uplink transmission.

**37.** The apparatus of claim 36, wherein the first-type matrix is a combination of a matrix W and a matrix Z,

in case that $2^N$ uplink antenna ports exist in each coherent transmission group, the matrix W comprises a matrix in full-coherent codewords for uplink $2^i$ antenna ports, and the matrix Z comprises a zero matrix with $2^i$ rows, wherein N is a positive integer, $N < \log_2 P$, P is a total quantity of uplink antenna ports, and a value of i is at least one integer from 1 to N.

**38.** The apparatus of claim 37, wherein in case that $2^K$ uplink antenna ports exist in each coherent transmission group, the first-type matrix is obtained by selecting a combined matrix obtained by any combination of the matrix W and the matrix Z based on at least one of the following rules:

the matrix W is a matrix in full-coherent codewords for uplink $2^K$ antenna ports, and a difference in quantities of non-zero elements in different rows of the combined matrix is less than or equal to 1; or
the matrix W is a matrix in full-coherent codewords for uplink $2^j$ antenna ports, and a quantity of non-zero elements in each row of the combined matrix is less than or equal to 2,
wherein K is an integer, $1 < K < \log_2 P$, and a value of j is at least one integer from 1 to K; and
in case that two uplink antenna ports exist in each coherent transmission group, the first-type matrix is obtained by selecting a combined matrix obtained by any combination of the matrix W and the matrix Z based on the following rules:
a quantity of non-zero elements in each row of the combined matrix is less than or equal to 2, and a difference in quantities of non-zero elements in different rows of the combined matrix is less than or equal to 1.

**39.** The apparatus of claim 36, wherein the second-type matrix is $\frac{1}{\sqrt{2}}\begin{bmatrix} A \\ B \end{bmatrix}$, wherein both the matrix A and the matrix B are matrices in partial-coherent codewords for uplink P/2 antenna ports, or both the matrix A and the matrix B are matrices in non-coherent codewords for uplink P/2 antenna ports.

**40.** The apparatus of claim 36, wherein the candidate precoding matrix further comprises a third-type matrix, and the third-type matrix is a matrix with only one non-zero element in each row and each column.

**41.** The apparatus of claim 40, wherein the third-type matrix is obtained by selecting any candidate matrix with only one non-zero element in each row and each column based on any one or more of the following rules:

serial numbers of rows in which non-zero elements of the candidate matrix are located are continuous;
an interval between serial numbers of rows in which non-zero elements in adjacent columns of the candidate matrix are located is P/2;
an interval between serial numbers of rows in which non-zero elements in adjacent columns of the candidate matrix are located is P/2-1; or
an interval between serial numbers of rows in which non-zero elements in adjacent columns of the candidate matrix are located is P/2-2,
wherein P is a total quantity of uplink antenna ports.

**42.** The apparatus of any one of claims 36 to 41, wherein the candidate precoding matrix is determined based on the following steps:

determining a quantity M of target candidate matrices, and obtaining multiple initial matrix combinations consisting of each M initial precoding matrices in an initial precoding matrix set;
determining an intra-group matrix difference value of each initial matrix combination based on a chordal distance between every two initial precoding matrices in each initial matrix combination; and
selecting, based on intra-group matrix difference values of multiple initial matrix combinations, a candidate matrix combination from the multiple initial matrix combinations, and determining M initial precoding matrices in the candidate matrix combination as the candidate precoding matrices.

**43.** A processor-readable storage medium, wherein the processor-readable storage medium stores a computer program, and the computer program is used to cause a processor to perform the method for uplink transmission of any one of claims 1 to 14.

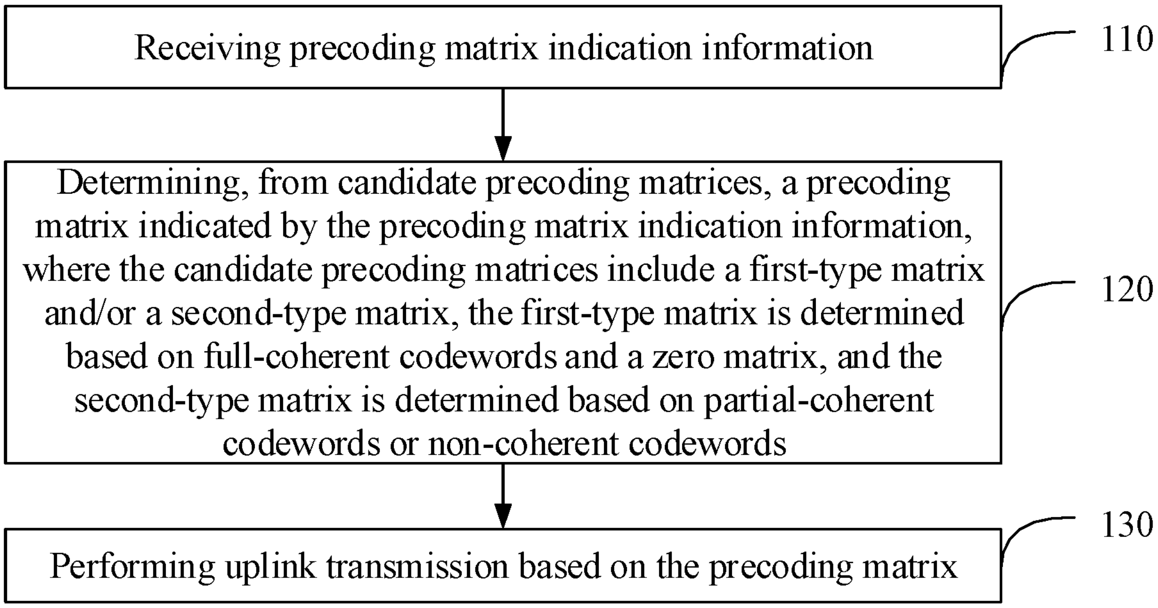
Receiving precoding matrix indication information
110
Determining, from candidate precoding matrices, a precoding matrix indicated by the precoding matrix indication information, where the candidate precoding matrices include a first-type matrix and/or a second-type matrix, the first-type matrix is determined based on full-coherent codewords and a zero matrix, and the second-type matrix is determined based on partial-coherent codewords or non-coherent codewords
120
Performing uplink transmission based on the precoding matrix
130

FIG. 1

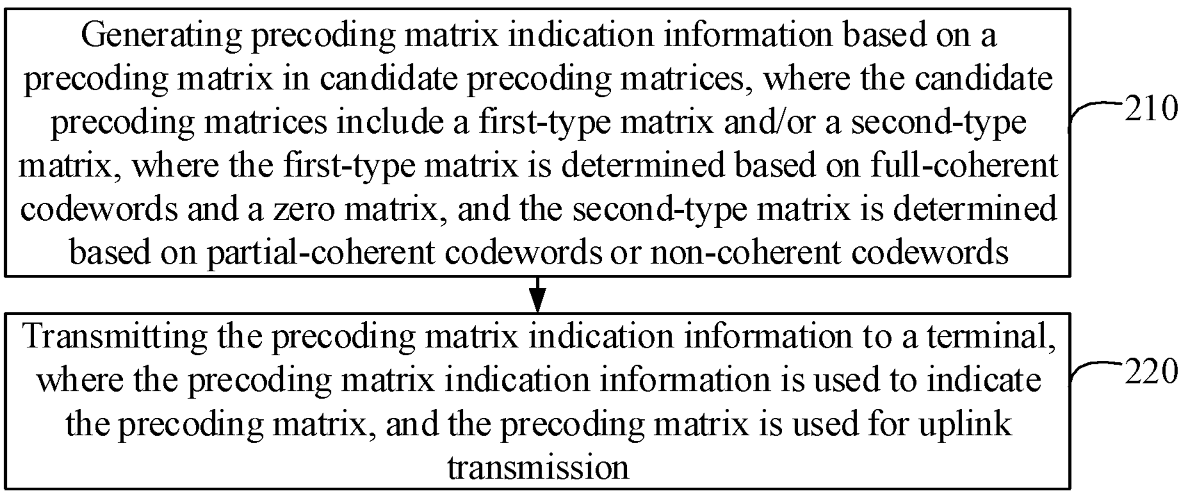
Generating precoding matrix indication information based on a precoding matrix in candidate precoding matrices, where the candidate precoding matrices include a first-type matrix and/or a second-type matrix, where the first-type matrix is determined based on full-coherent codewords and a zero matrix, and the second-type matrix is determined based on partial-coherent codewords or non-coherent codewords
210
Transmitting the precoding matrix indication information to a terminal, where the precoding matrix indication information is used to indicate the precoding matrix, and the precoding matrix is used for uplink transmission
220

FIG. 2

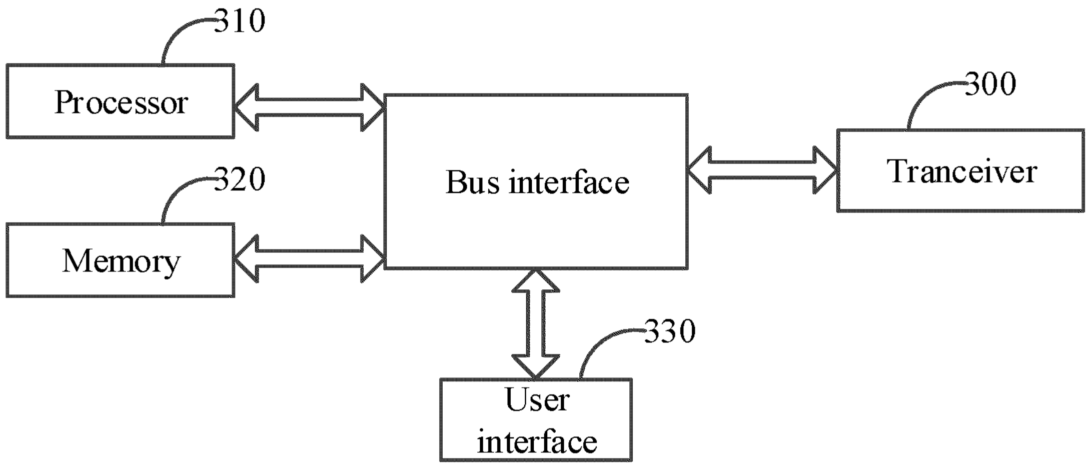


FIG. 3

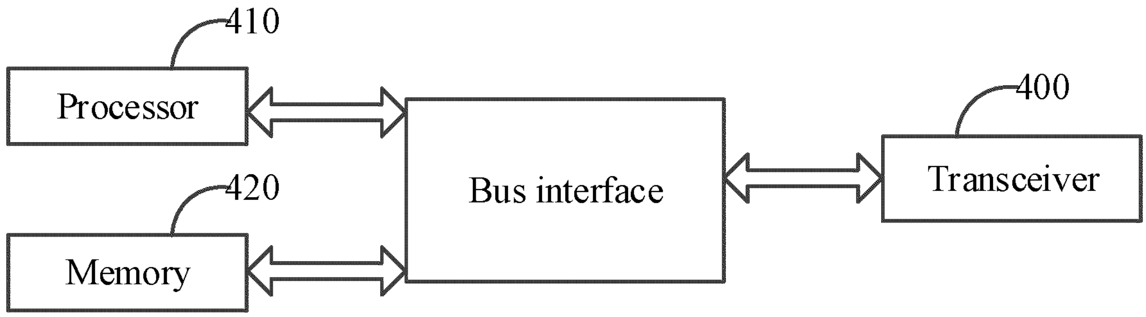


FIG. 4

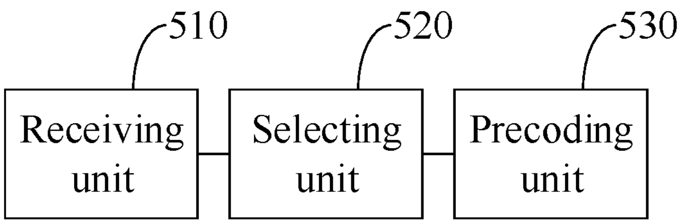


FIG. 5

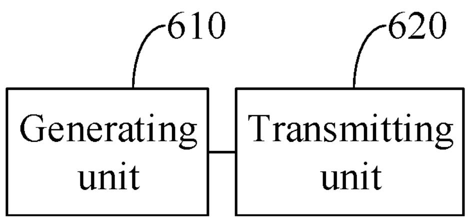


FIG. 6

## INTERNATIONAL SEARCH REPORT

International application No.
**PCT/CN2023/116122**

**A. CLASSIFICATION OF SUBJECT MATTER**

H04B7/04(2017.01)i

According to International Patent Classification (IPC) or to both national classification and IPC

**B. FIELDS SEARCHED**

Minimum documentation searched (classification system followed by classification symbols)

IPC:H04B

Documentation searched other than minimum documentation to the extent that such documents are included in the fields searched

Electronic data base consulted during the international search (name of data base and, where practicable, search terms used)

CNABS; CNTXT; CNKI; VEN; DWPI; EPTXT; USTXT; WOTXT; IEEE; 3GPP: 预编码矩阵, 预编码, 全相干, 相干, 部分相干, 零, 零矩阵, 矩阵, 不相干, 码本, 码字, precode, coherence, coherent, matrix, zero, part, code

**C. DOCUMENTS CONSIDERED TO BE RELEVANT**

| Category* | Citation of document, with indication, where appropriate, of the relevant passages | Relevant to claim No. |
|---|---|---|
| X | WO 2022082689 A1 (HUAWEI TECHNOLOGIES CO., LTD.) 28 April 2022 (2022-04-28) description, page 7, paragraph 3 to page 36, paragraph 6, and figures 1-11 | 1-43 |
| X | CN 109787668 A (HUAWEI TECHNOLOGIES CO., LTD.) 21 May 2019 (2019-05-21) description, paragraphs [0130]-[0566], and figures 1-6 | 1-43 |
| X | CN 112751597 A (HUAWEI TECHNOLOGIES CO., LTD.) 04 May 2021 (2021-05-04) description, paragraphs [0182]-[0271], and figures 1-5 | 1-43 |
| A | CN 110971275 A (CHINA ACADEMY OF TELECOMMUNICATIONS TECHNOLOGY) 07 April 2020 (2020-04-07) entire document | 1-43 |
| A | CN 111357208 A (TELEFONAKTIEBOLAGET LM ERICSSON (PUBL)) 30 June 2020 (2020-06-30) entire document | 1-43 |
| A | US 2017201307 A1 (LG ELECTRONICS INC.) 13 July 2017 (2017-07-13) entire document | 1-43 |

☐ Further documents are listed in the continuation of Box C. ☑ See patent family annex.

* Special categories of cited documents:
- "A" document defining the general state of the art which is not considered to be of particular relevance
- "D" document cited by the applicant in the international application
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **15 November 2023** | **16 November 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | Telephone No. |

Form PCT/ISA/210 (second sheet) (July 2022)

**INTERNATIONAL SEARCH REPORT**
**Information on patent family members**

International application No.
**PCT/CN2023/116122**

| Patent document cited in search report | Publication date (day/month/year) | Patent family member(s) | Publication date (day/month/year) |
|---|---|---|---|
| WO 2022082689 A1 | 28 April 2022 | EP 4213424 A1 | 19 July 2023 |
| | | US 2023261841 A1 | 17 August 2023 |
| CN 109787668 A | 21 May 2019 | US 2021266047 A1 | 26 August 2021 |
| | | US 11251846 B2 | 15 February 2022 |
| | | KR 20200087818 A | 21 July 2020 |
| | | KR 102332980 B1 | 01 December 2021 |
| | | US 2020274585 A1 | 27 August 2020 |
| | | US 10958320 B2 | 23 March 2021 |
| | | AU 2018369056 A1 | 02 July 2020 |
| | | AU 2018369056 B2 | 21 October 2021 |
| | | NZ 765334 A | 25 March 2022 |
| | | EP 3713104 A1 | 23 September 2020 |
| | | EP 3713104 A4 | 09 December 2020 |
| | | CA 3082725 A1 | 23 May 2019 |
| | | CA 3082725 C | 26 September 2023 |
| | | JP 2021503239 A | 04 February 2021 |
| | | JP 7216088 B2 | 31 January 2023 |
| | | BR 112020009497 A2 | 03 November 2020 |
| | | WO 2019096071 A1 | 23 May 2019 |
| CN 112751597 A | 04 May 2021 | WO 2021083285 A1 | 06 May 2021 |
| CN 110971275 A | 07 April 2020 | EP 3859989 A1 | 04 August 2021 |
| | | EP 3859989 A4 | 17 November 2021 |
| | | TW 202013904 A | 01 April 2020 |
| | | TWI 718686 B | 11 February 2021 |
| | | KR 20210068107 A | 08 June 2021 |
| | | KR 102495713 B1 | 06 February 2023 |
| | | US 2021399773 A1 | 23 December 2021 |
| | | US 11342972 B2 | 24 May 2022 |
| | | WO 2020063365 A1 | 02 April 2020 |
| CN 111357208 A | 30 June 2020 | US 2022337296 A1 | 20 October 2022 |
| | | US 11683078 B2 | 20 June 2023 |
| | | US 2021359733 A1 | 18 November 2021 |
| | | US 11418240 B2 | 16 August 2022 |
| | | RU 2745419 C1 | 25 March 2021 |
| | | JP 2021503732 A | 12 February 2021 |
| | | JP 7076542 B2 | 27 May 2022 |
| | | EP 3761520 A1 | 06 January 2021 |
| | | EP 3761520 B1 | 26 May 2021 |
| | | KR 20210138173 A | 18 November 2021 |
| | | KR 102342173 B1 | 21 December 2021 |
| | | CA 3082555 A1 | 23 May 2019 |
| | | CA 3082555 C | 14 March 2023 |
| | | WO 2019096843 A1 | 23 May 2019 |
| | | EP 3913817 A1 | 24 November 2021 |
| | | KR 20200067873 A | 12 June 2020 |
| | | KR 102328352 B1 | 17 November 2021 |
| | | US 2023144128 A1 | 11 May 2023 |
| | | US 11705946 B2 | 18 July 2023 |
| | | EP 3545626 A1 | 02 October 2019 |
| | | EP 3545626 B1 | 23 September 2020 |

Form PCT/ISA/210 (patent family annex) (July 2022)

**INTERNATIONAL SEARCH REPORT**
**Information on patent family members**

International application No.
**PCT/CN2023/116122**

| Patent document cited in search report | Publication date (day/month/year) | Patent family member(s) | Publication date (day/month/year) |
|---|---|---|---|
| | | ES 2837420 T3 | 30 June 2021 |
| | | MX 2020004993 A | 27 August 2020 |
| | | IL 273968 A | 31 May 2020 |
| | | BR 112020008535 A2 | 20 October 2020 |
| | | HUE 052185 T2 | 28 April 2021 |
| | | AU 2018367102 A1 | 02 July 2020 |
| | | AU 2018367102 B2 | 29 July 2021 |
| US 2017201307 A1 | 13 July 2017 | WO 2016018101 A1 | 04 February 2016 |
| | | US 10355763 B2 | 16 July 2019 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- CN 202211216179